(19) Europäisches Patentamt
European Patent Office
Office européen des brevets

(11) **EP 4 665 058 A1**

(12) **EUROPEAN PATENT APPLICATION**
published in accordance with Art. 153(4) EPC

(43) Date of publication:
**17.12.2025 Bulletin 2025/51**

(21) Application number: **23928083.7**

(22) Date of filing: **23.03.2023**

(51) International Patent Classification (IPC):
***H04W 72/40*** *(2023.01)*

(52) Cooperative Patent Classification (CPC):
**H04W 72/40**

(86) International application number:
**PCT/CN2023/083447**

(87) International publication number:
**WO 2024/192771 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **MA, Teng
Dongguan, Guangdong 523860 (CN)**
• **ZHAO, Zhenshan
Dongguan, Guangdong 523860 (CN)**

(74) Representative: **RGTH
Patentanwälte PartGmbB
Neuer Wall 10
20354 Hamburg (DE)**

(54) **COMMUNICATION METHOD, TERMINAL DEVICE, AND NETWORK DEVICE**

(57)     The present application provides a communication method, a terminal device, and a network device. The method comprises: before performing communication by means of a first sidelink resource, a terminal device sends a first CPE, wherein the length of the first CPE is a first length. Before using a first sidelink communication resource for communication, the terminal device can occupy a channel by means of the first CPE until the terminal device can perform sidelink communication by means of the first sidelink resource. For example, by means of the first CPE, other communications devices can be prevented from occupying a channel where the terminal device has succeeded in LBT, so that the terminal device can normally perform sidelink communication.

FIG. 17

EP 4 665 058 A1

## Description

### TECHNICAL FIELD

This application relates to the field of communications technologies, and more specifically, to a communication method, a terminal device, and a network device.

### BACKGROUND

In sidelink communication based on license-free spectrum, after listen-before-talk (listen-before-talk, LBT) succeeds, sidelink communication may still not be implemented. For example, in some sidelink communications, a resource used for sidelink communication starts from a slot (slot) boundary, that is, a sidelink signal or a sidelink channel may be transmitted only from a slot boundary. Therefore, in a time period from a time at which LBT succeeds to a slot boundary, another communications device in an inter-system may preempt a channel, causing that a terminal device cannot perform sidelink communication when the slot boundary arrives.

### SUMMARY

This application provides a communications method, a terminal device, and a network device. The following describes the aspects related to this application.

According to a first aspect, a communication method is provided, and the method includes: transmitting, by a terminal device, a first cyclic prefix extension (cyclic prefix extension, CPE) before performing communication by using a first sidelink resource, where a length of the first CPE is a first length.

According to a second aspect, a communication method is provided, and the method includes: transmitting, by a network device, first information to a terminal device, where the first information is used to indicate a first length, the first length is used to indicate a length of a first CPE, and the first CPE is a CPE transmitted before communication performed by the terminal device by using a first sidelink resource.

According to a third aspect, a terminal device is provided, and the terminal device includes: a first transmitting unit, configured to transmit a first CPE before performing communication by using a first sidelink resource, where a length of the first CPE is a first length.

According to a fourth aspect, a network device is provided, and the network device includes: a second transmitting unit, configured to transmit first information to a terminal device, where the first information is used to indicate a first length, the first length is used to indicate a length of a first CPE, and the first CPE is a CPE transmitted before communication performed by the terminal device by using a first sidelink resource.

According to a fifth aspect, a terminal device is provided, and the terminal device includes a processor and a memory. The memory is configured to store one or more computer programs, and the processor is configured to invoke a computer program in the memory to cause the terminal device to perform some or all of the steps in the method according to the first aspect.

According to a sixth aspect, a network device is provided, and the network device includes a processor, a memory, and a transceiver. The memory is configured to store one or more computer programs, and the processor is configured to invoke the computer program in the memory to cause the network device to execute some or all of the steps in the method according to the second aspect.

According to a seventh aspect, an embodiment of this application provides a communications system, where the system includes the foregoing terminal device and/or network device. In another possible design, the system may further include another device that interacts with the terminal device or the network device in the solution provided in embodiments of this application.

According to an eighth aspect, an embodiment of this application provides a computer-readable storage medium. The computer-readable storage medium stores a computer program, and the computer program causes a terminal device and/or a network device to perform some or all of the steps in the method according to the foregoing aspects.

According to a ninth aspect, an embodiment of this application provides a computer program product. The computer program product includes a non-transitory computer-readable storage medium storing a computer program, and the computer program is operable to cause a terminal device and/or a network device to perform some or all of the steps in the method according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the method according to the foregoing aspects.

Before sidelink communication is performed by using the first sidelink communication resource, the terminal device may occupy a channel by using the first CPE until the terminal device can perform sidelink communication by using the first sidelink resource. It may be understood that, use of the first CPE can prevent another communications device from preempting the channel, so that the terminal device can normally perform sidelink communication.

## BRIEF DESCRIPTION OF DRAWINGS

FIG. 1 is an example diagram of a system architecture of a wireless communications system to which embodiments of this application are applicable.
FIG. 2 is an example diagram of a scenario of sidelink communication within network coverage.
FIG. 3 is an example diagram of a scenario of sidelink communication with partial network coverage.
FIG. 4 is an example diagram of a scenario of sidelink communication outside network coverage.
FIG. 5 is an example diagram of a scenario of sidelink communication based on a central control node.
FIG. 6 is an example diagram of a broadcast-based sidelink communication mode.
FIG. 7 is an example diagram of a unicast-based sidelink communication mode.
FIG. 8 is an example diagram of a multicast-based sidelink communication mode.
FIG. 9 includes example diagrams of slot structures for some sidelink communications systems (such as an NR-V2X system).
FIG. 10 is an example diagram in which OFDM symbols available for PSSCHs change between different slots.
FIG. 11 is an example diagram of a time-frequency resource occupied by second-stage SCI in one slot.
FIG. 12 is a schematic diagram of a DMRS pattern of a PSCCH.
FIG. 13 is a schematic diagram of time domain positions of four DMRS symbols in a case of a quantity of PSSCH symbols being 14.
FIG. 14 is an example diagram of a single-symbol DMRS frequency domain type 1.
FIG. 15 is an example diagram of a time-frequency position of an SL CSI-RS.
FIG. 16 is an example diagram of one channel occupancy time obtained by a communications device after successful LBT on a channel in unlicensed spectrum and use of resources within the channel occupancy time for signal transmission.
FIG. 17 is a schematic flowchart of a communication method according to an embodiment of this application.
FIG. 18 is an example diagram of a method for indicating a CPE length according to an embodiment of this application.
FIG. 19 is an example diagram of a scenario in which different terminal devices select different CPE lengths.
FIG. 20 is an example diagram of another method for indicating a CPE length according to an embodiment of this application.
Parts (a), (b), and (c) in FIG. 21 are respectively example diagrams of relationships between different resource pools.
FIG. 22 is a schematic structural diagram of a terminal device according to an embodiment of this application.
FIG. 23 is a schematic structural diagram of a network device according to an embodiment of this application.
FIG. 24 is a schematic structural diagram of an apparatus for communication according to an embodiment of this application.

## DESCRIPTION OF EMBODIMENTS

Technical solutions in this application are described below with reference to the accompanying drawings.

### Communications system

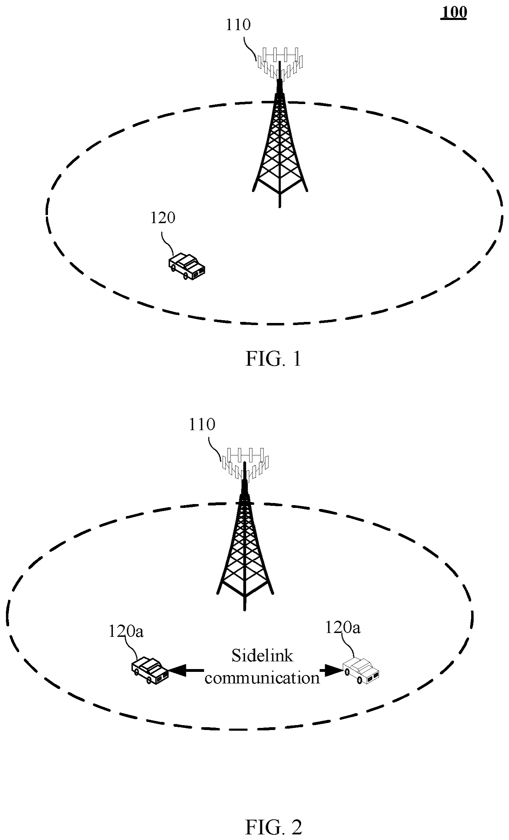

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide communication coverage for a specific geographical area, and may communicate with the terminal device 120 located within the coverage.

Optionally, the wireless communications system 100 may include a plurality of network devices, and another quantity of terminal devices may be included within coverage of each network device, which is not limited in embodiments of this application.

Optionally, the wireless communications system 100 may further include other network entities such as a network controller and a mobility management entity, which is not limited in embodiments of this application.

It should be understood that the technical solutions in embodiments of this application may be applied to various communications systems, for example, a fifth generation (5th generation, 5G) system or a new radio (new radio, NR), a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as user equipment (user equipment, UE), an access terminal, a user unit, a user station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to act as a base station. For example, the terminal device may act as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may be configured to act as a base station.

The network device in embodiments of this application may be a device for communicating with the terminal device. The network device may also be referred to as an access network device or a wireless access network device. For example, the network device may be a base station. The network device in embodiments of this application may be a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device (device-to-device, D2D), vehicle-to-vehicle (vehicle-to-vehicle, V2V), vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. A scenario in which the network device and the terminal device are located is not limited in embodiments of this application.

It should be understood that all or some of functions of the communications device in this application may alternatively be implemented by software functions running on hardware, or by virtualization functions instantiated on a platform (for example, a cloud platform).

**Sidelink communication in different network coverage statuses**

Sidelink communication (or sidelink transmission) refers to a communications technology based on a sidelink (sidelink, SL). Sidelink communication may be, for example, D2D or V2X. Sidelink communication supports direct transmission of communication data between terminal devices. Direct transmission of the communication data between terminal devices may have higher spectral efficiency and a lower transmission delay. For example, a vehicle-to-everything system uses a sidelink communication technology.

Sidelink communication may be classified, depending on a network coverage status of the terminal device, into sidelink communication within network coverage, sidelink communication with partial network coverage, sidelink communication outside network coverage, and sidelink communication based on a central control node.

FIG. 2 is an example diagram of a scenario of sidelink communication within network coverage. In the scenario shown in FIG. 2, both the two terminal devices 120a are located within coverage of the network device 110. Therefore, both the two terminal devices 120a may receive configuration signalling (where the configuration signalling in this application may alternatively be replaced with configuration information) from the network device 110, and determine a sidelink configuration based on the configuration signalling from the network device 110. After performing sidelink configuration, both the two terminal devices 120a may perform sidelink communication on a sidelink.

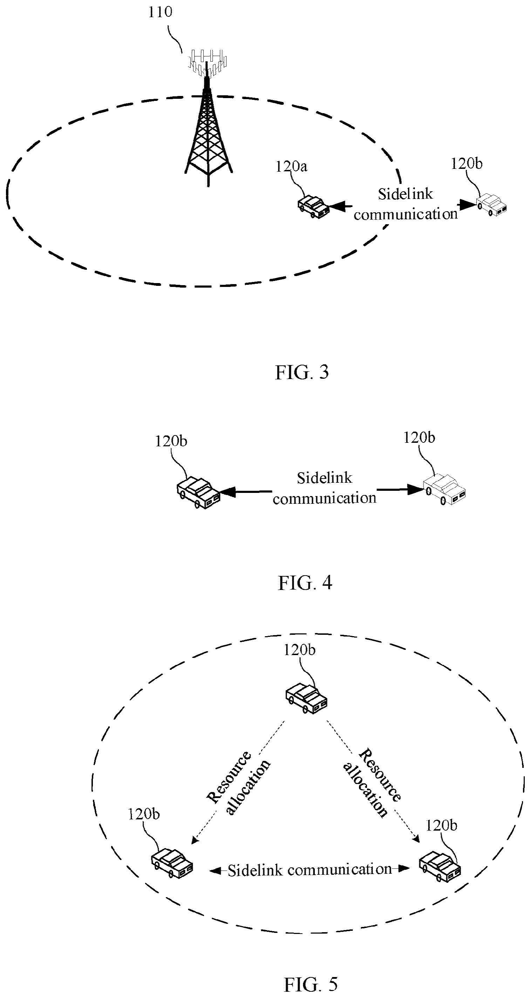

FIG. 3 is an example diagram of a scenario of sidelink communication with partial network coverage. In the scenario shown in FIG. 3, a terminal device 120a performs sidelink communication with a terminal device 120b. The terminal device 120a is located within coverage of a network device 110. Therefore, the terminal device 120a can receive configuration signalling from the network device 110, and determine a sidelink configuration based on the configuration signalling from the network device 110. The terminal device 120b is located outside network coverage, and cannot receive the configuration signalling from the network device 110. In this case, the terminal device 120b may determine a sidelink configuration based on pre-configuration (pre-configuration) information and/or information that is carried on a physical sidelink broadcast channel (physical sidelink broadcast channel, PSBCH) transmitted by the terminal device 120a located within the network coverage. After performing sidelink configuration, both the terminal device 120a and the terminal device 120b may perform sidelink communication on a sidelink.

FIG. 4 is an example diagram of a scenario of sidelink communication outside network coverage. In the scenario shown in FIG. 4, two terminal devices 120b are both located outside network coverage. In this case, both the two terminal devices 120b may determine a sidelink configuration based on pre-configuration information. After performing sidelink configuration, both the two terminal devices 120b may perform sidelink communication on a sidelink.

FIG. 5 is an example diagram of a scenario of sidelink communication based on a central control node. In the scenario shown in FIG. 5, a plurality of terminal devices 120b may form a communications group. The communication group may have a central control node. In some cases, the central control node may become a cluster header (cluster header, CH) terminal device. The central control node may have one or more of the following functions: being responsible for establishment of the communication group; joining and leaving of a group member; resource coordination, allocation of sidelink transmission resources for another terminal device; reception of sidelink feedback information from another terminal device; resource coordination with another communication group; and other functions.

**Mode of sidelink communication**

Two modes (or referred to as transmission modes) of sidelink communication are defined in some standards or protocols (for example, 3rd generation partnership project (3rd generation partnership project, 3GPP)): a first mode and a second mode.

In the first mode, a resource (the resource mentioned in this application may also be referred to as a transmission resource, or a time-frequency resource) of a terminal device is allocated by a network device. The terminal device may transmit data on a sidelink based on the resource allocated by the network device. The network device may allocate, to the terminal device, a resource for single transmission; or may allocate, to the terminal device, a resource for semi-static transmission. The first mode may be applied to a scenario in which there is coverage of the network device, for example, the scenario shown in FIG. 2. In the scenario shown in FIG. 2, the terminal device 120a is located within the coverage of the network device 110. Therefore, the network device 110 may allocate, to the terminal device 120a, a resource used in a sidelink transmission process.

In the second mode, the terminal device may independently select one or more resources from a resource pool (resource pool, RP). Then, the terminal device may perform sidelink transmission based on a selected resource. For example, in the scenario shown in FIG. 4, the terminal device 120b is located outside the cell coverage. Therefore, the terminal device 120b may independently select a resource from a pre-configured resource pool to perform sidelink transmission. Alternatively, in the scenario shown in FIG. 2, the terminal device 120a may independently select one or more resources from a resource pool configured by the network device 110, to perform sidelink transmission.

### Data transmission modes of sidelink communication

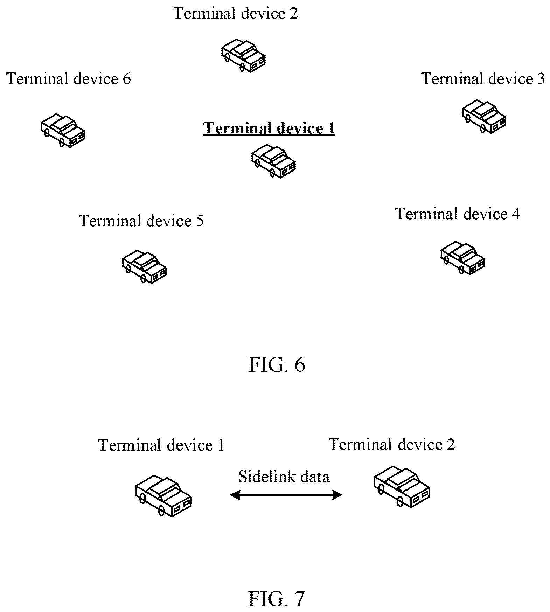

Some sidelink communications systems (for example, LTE-V2X) support a broadcast-based data transmission mode (referred to as broadcast transmission for short). For the broadcast transmission, a receive end terminal device may be any terminal device around a transmit end terminal device. For example, in FIG. 6, a terminal device 1 is a transmit-end terminal device, and a receive-end terminal device corresponding to the transmit-end terminal device is any terminal device around the terminal device 1, for example, may be a terminal device 2 to a terminal device 6 in FIG. 6.

In addition to the broadcast transmission, some communications systems also support a unicast-based data transmission mode (referred to as unicast transmission for short) and/or a multicast-based data transmission mode (referred to as multicast transmission for short). For example, NR-V2X expects to support autonomous driving. Autonomous driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, NR-V2X introduces unicast transmission and multicast transmission.

For the unicast transmission, the receive end terminal device generally includes only one terminal device. For example, in FIG. 7, unicast transmission is performed between a terminal device 1 and a terminal device 2. The terminal device 1 may be a transmit end terminal device, and the terminal device 2 may be a receive end terminal device. Alternatively, the terminal device 1 may be a receive end terminal device, and the terminal device 2 may be a transmit end terminal device.

For the multicast transmission, the receive end terminal device may be a terminal device in a communication group (group), or the receive end terminal device may be a terminal device within a specific transmission distance. For example, in FIG. 7, a terminal device 1, a terminal device 2, a terminal device 3, and a terminal device 4 constitute a communication group. If the terminal device 1 transmits data, all the other terminal devices (the terminal device 2 to the terminal device 4) in the group may be receive-end terminal devices.

### Frame structures of sidelink communication systems

One slot may include a physical sidelink control channel (physical sidelink control channel, PSCCH), a physical sidelink shared channel (physical sidelink shared channel, PSSCH), a physical sidelink feedback channel (physical sidelink feedback channel, PSFCH), and the like. The channels will be described later in detail, and details are not described herein again.

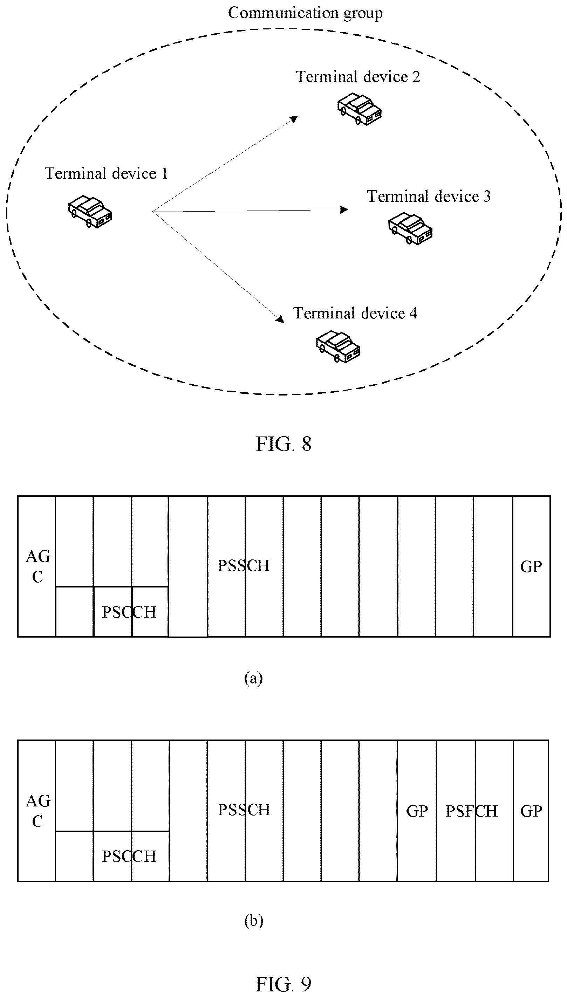

FIG. 9 includes example diagrams of slot structures for some sidelink communications systems (such as an NR-V2X system). Part (a) in FIG. 9 is an example diagram of a slot structure that does not include a physical sidelink feedback channel (physical sidelink feedback channel, PSFCH) in a slot. Part (b) in FIG. 9 is an example diagram of a slot structure that includes a PSFCH channel in a slot.

As shown in FIG. 9, in time domain, a PSCCH may occupy two or three orthogonal frequency division multiplexing (orthogonal frequency division multiplexing, OFDM) symbols from the second sidelink symbol of a slot, and may occupy {10, 12, 15, 20, 25} physical resource blocks (physical resource block, PRB/RB) in frequency domain. To reduce complexity of blind detection performed by a terminal device on the PSCCH, one quantity of PSCCH symbols and one quantity of PRBs may be only allowed to be configured in one resource pool. In addition, a sub-channel is a minimum granularity for PSSCH resource allocation in some sidelink communications systems (for example, an NR-V2X system). Therefore, a quantity of PRBs occupied by the PSCCH must be less than or equal to a quantity of PRBs included in one sub-channel in a resource pool, to avoid additional limitations on PSSCH resource selection or allocation.

In time domain, the PSSCH may start from the second sidelink symbol of the slot. The last time domain symbol in a slot is a guard period (guard period, GP) symbol (also referred to as a guard period (GAP) symbol), and remaining symbols may be used for mapping the PSSCH. The first sidelink symbol in the slot may be a repetition of the second sidelink symbol. The receive end terminal device may use the first sidelink symbol as an automatic gain control (automatic gain control, AGC) symbol, and data on the symbol is generally not used for data demodulation. As shown in part (a) in FIG. 9, the PSSCH may occupy K sub-channels in frequency domain, and each sub-channel may include N consecutive PRBs, where K may be an integer greater than 0, and N may be an integer greater than 0.

As shown in part (b) in FIG. 9, when a slot includes a PSFCH channel, the second-to-last and the third-to-last symbols in the slot may be used for transmission of the PSFCH channel, and a time domain symbol located before the PSFCH channel may be used as a GP symbol.

### PSSCH

In some sidelink communications systems (for example, an NR-V2X system), a PSSCH may be configured to carry second-stage sidelink control information (sidelink control information, SCI). The second-stage SCI may include SCI 2-A or SCI 2-B. The second-stage SCI may use a Polar coding scheme. The second-stage SCI may be fixedly adopted with QPSK modulation. A data part of the PSSCH may use low density parity check (low density parity check, LDPC). A maximum modulation order that can be supported by the data part of the PSSCH is 256 QAM.

In some sidelink communication systems (such as an NR-V2X system), a PSSCH supports a maximum of two streams, and data on two layers is mapped to two antenna ports by using a precoding unitary matrix. At most one TB can be transmitted in one PSSCH. However, different from a transmission mode for the data part of the PSSCH, when a dual-stream transmission mode is used for the PSSCH, modulation symbols of the second-stage SCI on the two streams may be completely the same. Such design can ensure receiving performance of the second-stage SCI on a high-correlation channel.

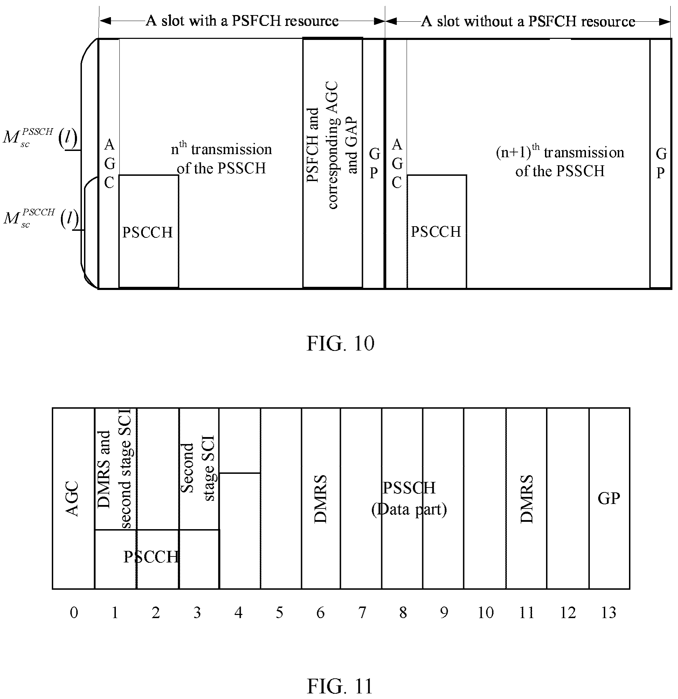

In some sidelink communications systems (such as an NR-V2X system), a maximum number of retransmissions of one PSSCH is 32. If a PSFCH resource exists in a resource pool, and a configuration cycle of the PSFCH resource is 2 or 4, available OFDM symbols may change between slots in which different transmissions of one PSSCH are located. FIG. 10 is an example diagram in which OFDM symbols available for PSSCHs change between different slots. As shown in FIG. 10, due to existence of a PSFCH resource, a quantity of available OFDM symbols for the $n^{th}$ transmission of a PSSCH is different from a quantity of available OFDM symbols for the $(n+1)^{th}$ transmission of the PSSCH. If a quantity ( $N_{symbol}^{PSSCH}$ ) of symbols for transmission of the PSSCH is calculated according to a real quantity of OFDM symbols in one slot, values of $Q'_{SCI2}$ may vary due to different quantities of symbols for transmissions of the PSSCH in one slot, and a change of $Q'_{SCI2}$ causes a change of a size of a TB carried by the PSSCH, as mentioned below. To ensure that a transport block size (transmission block size, TBS) in multiple PSSCH transmissions remains unchanged, $N_{symbol}^{PSSCH}$ is calculated without using the real quantity of PSFCH symbols. In addition, $M_{sc}^{SCI2}(l)$ may be calculated without considering a quantity of resource elements (resource element, RE) occupied by a PSSCH demodulation reference signal (demodulation reference symbol, DMRS) and a quantity of REs occupied by a phase-tracking reference signal (phase-tracking reference signals, PT-RS) that may change in a retransmission process.

A code rate of the second-stage SCI may be dynamically adjusted in a specific range, and a specific code rate to be used may be indicated by first-stage SCI. Therefore, even if the code rate changes, a receive end does not need to perform blind detection on the second-stage SCI. FIG. 11 is an example diagram of a time-frequency resource occupied by second-stage SCI in one slot. As shown in FIG. 11, a modulation symbol of the second-stage SCI may be mapped starting from a symbol in which the first PSSCH DMRS is located and mapped first in frequency domain and then in time domain. On an OFDM symbol where a DMRS is located, the second-stage SCI may be mapped to an RE not occupied by the DMRS.

In a resource pool, data part of a PSSCH may use a plurality of different modulation and coding scheme (modulation and coding scheme, MCS) tables. For example, one or more of the following tables may be used: a conventional 64 QAM MCS table, a 256 QAM MCS table, or a low spectral efficiency 64 QAM MCS table. In one transmission, an MCS table specifically used by the data part of the PSSCH may be indicated by a field "MCS table indication" in the first-stage SCI. To control PAPR, the PSSCH must be transmitted by using consecutive PRBs. A sub-channel is a minimum frequency domain resource granularity for the PSSCH. Therefore, the PSSCH must occupy consecutive sub-channels.

**Sidelink TBS**

For a PSSCH, a TBS determining mechanism for a physical downlink shared channel (physical downlink shared channel, PDSCH) and a physical uplink shared channel (physical uplink shared channel, PUSCH) continues to be used, that is, a TBS is determined based on a reference value of a quantity of REs used for the PSSCH in a slot where the PSSCH is located, so that an actual code rate is as close to a target code rate as possible. It should be noted that, to ensure that a quantity of REs used to determine a TBS remains unchanged in a PSSCH retransmission process, a reference value of the quantity of REs is used instead of an actual quantity of REs, so that sizes of determined TBSs are the same. To achieve this objective, in a TBS determining process, a reference value $N_{RE}$ of a quantity of REs occupied by the PSSCH may be determined according to the following formula:

$$N_{RE} = N'_{RE} \cdot n_{PRB} - N_{RE}^{SCI,1} - N_{RE}^{SCI,2}.$$

Herein $n_{PRB}$ denotes a quantity of PRBs occupied by the PSSCH, $N_{RE}^{SCI,1}$ denotes a quantity of REs (including an RE occupied by a DMRS of the PSCCH) occupied by first-stage SCI, $N_{RE}^{SCI,2}$ denotes a quantity of REs occupied by second-stage SCI (as described above), and $N'_{RE}$ denotes a quantity of reference REs available for the PSSCH in one PRB and $N'_{RE}$ may be determined according to the following formula:

$$N'_{RE} = N_{sc}^{RB} \left( N_{symb}^{sh} - N_{symb}^{PSFCH} \right) - N_{oh}^{PRB} - N_{RE}^{DMRS} .$$

Herein $N_{sc}^{RB}$ may denote a quantity of subcarriers in one PRB, for example, $N_{sc}^{RB} = 12$. $N_{symb}^{sh}$ denotes a quantity of symbols available for sidelink in one slot, where the last GP symbol or the first symbol used for AGC are not included; $N_{symb}^{PSFCH}$ denotes a reference value of a quantity of symbols occupied by a PSFCH, for example, $N_{symb}^{PSFCH} = 0$ or 3, and a specific value may be indicated by the field "quantity of PSFCH symbols" in the first-stage SCI; $N_{oh}^{PRB}$ may denote a reference value of a quantity of REs occupied by a PT-RS and a channel state information reference signal (channel state information-reference signal, CSI-RS) and may be configured by using a radio resource control (radio resource control, RRC) layer parameter; and $N_{RE}^{DMRS}$ may denote an average quantity of DMRS REs in one slot, and is related to a DMRS pattern allowed in a resource pool. Table 1 shows a correspondence between a DMRS pattern allowed in a resource pool and $N_{RE}^{DMRS}$.

Table 1

| DMRS pattern | $N_{RE}^{DMRS}$ |
|---|---|
| {2} | 12 |
| {3} | 18 |
| {4} | 24 |
| {2.3} | 15 |
| {2.4} | 18 |
| {3.4} | 21 |
| {2, 3, 4} | 18 |

**Sidelink DMRS**

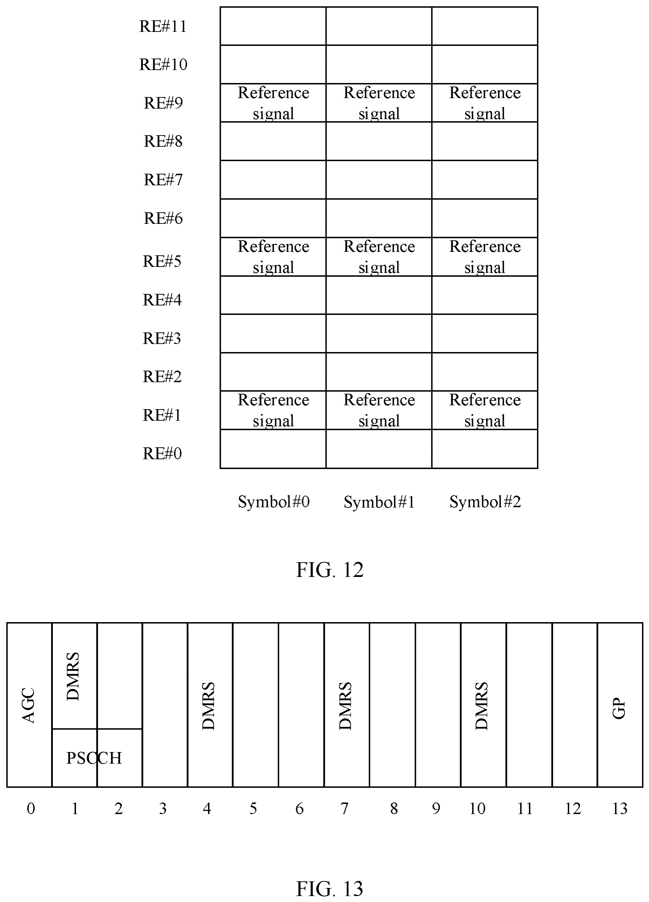

In some sidelink communications systems (for example, an NR-V2X system), a DMRS pattern of a PSCCH may be the same as that of a physical downlink control channel (physical downlink control channel, PDCCH). In other words, a DMRS may exist in an OFDM symbol of each PSCCH, and may be located in {# 1, #5, #9} REs of one PRB in frequency domain. FIG. 12 is a schematic diagram of a DMRS pattern of a PSCCH. A DMRS sequence of the PSCCH is generated by using the following formula:

$$r_l(m) = \frac{1}{\sqrt{2}} \left( 1 - 2c(m) \right) + j \frac{1}{\sqrt{2}} \left( 1 - 2c(m+1) \right) .$$

A pseudo-random sequence $c(m)$ may be initialized by $c_{\text{init}} = \left( 2^{17} \left( N_{\text{symb}}^{\text{slot}} n_{\text{s,f}}^{\mu} + l + 1 \right) \left( 2 N_{\text{ID}} + 1 \right) + 2 N_{\text{ID}} \right) \mod 2^{31}$. Herein $l$ may denote an index of an OFDM symbol in which DMRS is located in a slot, $n_{\text{s,f}}^{\mu}$ may denote an index of a slot in which a DMRS is located in a system frame,

$N_{\text{symb}}^{\text{slot}}$ may denote a quantity of OFDM symbols in one slot, $N_{\text{ID}} \in \{0,1,\cdots,65535\}$, and a specific value of $N_{\text{ID}}$ in one resource pool is configured or pre-configured by a network.

A plurality of time domain PSSCH DMRS patterns are adopted in some sidelink communications systems (for example, an NR-V2X system), that is, a design in a Uu interface of an NR system is used for reference. In one resource pool, a quantity of available DMRS patterns may be related to a quantity of PSSCH symbols in the resource pool. For specific quantities of PSSCH symbols (including the first AGC symbol) and PSCCH symbols, an available DMRS pattern and a position of each DMRS symbol in the pattern are shown in Table 2. FIG. 13 is a schematic diagram of time domain positions of four DMRS symbols in a case of a quantity of PSSCH symbols being 14.

Table 2

| Quantity of PSSCH symbols (including the 1st AGC symbol) | Position of a DMRS symbol (relative to a position of the 1st AGC symbol) | | | | | |
|---|---|---|---|---|---|---|
| | Quantity of PSCCH symbols being 2 | | | Quantity of PSCCH symbols being 3 | | |
| | Quantity of DMRS symbols | | | Quantity of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If a plurality of time-domain DMRS patterns are configured in a resource pool, a time-domain DMRS pattern to be specifically used is selected by a transmitting terminal device and indicated in first-stage SCI. In this design, a high-speed moving terminal device is allowed to select a high-density DMRS pattern, thereby ensuring accuracy of channel estimation; and a low-speed moving terminal device may use a low-density DMRS pattern, thereby improving spectral efficiency.

A generation manner of a PSSCH DMRS sequence is almost the same as a generation manner of a PSCCH DMRS sequence. The only difference lies in an initialization formula $c_{\text{init}}$ of a pseudo-random sequence $c(m)$, that is,

$$N_{ID} = \sum_{i=0}^{L-1} p_i \cdot 2^{L-1-i}$$

, where $p_i$ may be an $i^{\text{th}}$-bit CRC of a PSCCH that schedules the PSSCH; and L may be a quantity of PSCCH CRC bits, for example, $L=24$.

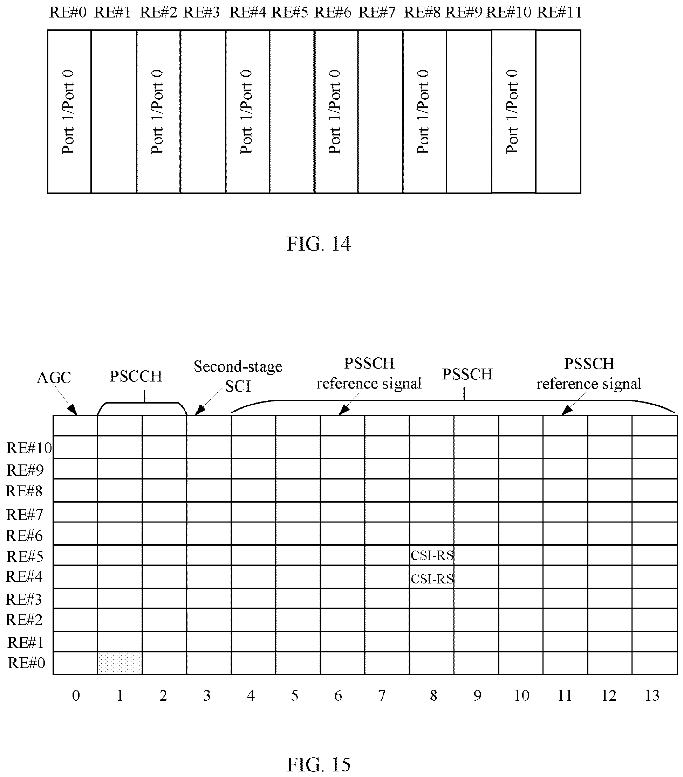

In an NR communications system, a PDSCH and a PUSCH support two frequency domain DMRS patterns: a DMRS frequency domain type 1 and a DMRS frequency domain type 2. For each frequency domain type, there may be two different types: a single-symbol DMRS type and a double-symbol DMRS type. A single-symbol DMRS frequency domain type 1 supports four DMRS ports, and a single-symbol DMRS frequency domain type 2 may support six DMRS ports. In a case of the double-symbol DMRS frequency domain type, a quantity of supported ports is doubled. However, in some sidelink communications systems (for example, NR-V2X), because a PSSCH may only need to support a maximum of two DMRS ports, only the single-symbol DMRS frequency domain type 1 may be supported. FIG. 14 is an example diagram of a single-symbol DMRS frequency domain type 1.

**Sidelink CSI-RS**

A sidelink communications system may support a sidelink CSI-RS (SL CSI-RS) to better support unicast communication. The SL CSI-RS may be transmitted when the following three conditions are met: a terminal device transmits a corresponding PSSCH, in other words, the terminal device cannot just transmit the SL CSI-RS only; higher layer signalling activates reporting of the SL CSI-RS; and when the higher layer signalling activates the reporting of the SL CSI-RS, a corresponding bit in the second-stage SCI transmitted by the terminal device triggers the reporting of the SL CSI-RS.

A maximum two ports are supported by the SL CSI-RS. When there are two ports, SL CSI-RSs for different ports are multiplexed in a code division manner on two adjacent REs of a same OFDM symbol, and a quantity of SL CSI-RSs for each port in one PRB is 1, that is, a density is 1. Therefore, in one PRB, the SL CSI-RS appears on a maximum of one OFDM symbol. A specific position of the OFDM symbol is determined by a transmitting terminal device. To avoid an impact on resource mapping of a PSCCH and second-stage SCI, the SL CSI-RS cannot be located in a same OFDM symbol as the PSCCH and the second-stage SCI. An OFDM symbol in which a DMRS of a PSSCH is located has relatively high channel estimation accuracy, and SL CSI-RSs of two ports occupy two consecutive REs in frequency domain. Therefore, the SL CSI-RSs cannot be transmitted on a same OFDM symbol as the DMRS of the PSSCH. A position of an OFDM symbol in which an SL CSI-RS is located is indicated by an sl-CSI-RS-FirstSymbol parameter in PC5 RRC.

A position of the first RE occupied by the SL CSI-RS in one PRB is indicated by a parameter sl-CSI-RS-FreqAllocation in the PC5 RRC. If the SL CSI-RS corresponds to one port, the parameter may be a bitmap whose length is 12 and corresponds to 12 REs in one PRB. If the SL CSI-RS corresponds to two ports, the parameter is a bitmap whose length is 6. In this case, the SL CSI-RS occupies two REs $2f(1)$ and $2f(1)+1$, where $f(1)$ may denote an index of a bit with a value of 1 in the bitmap. A frequency domain position of the SL CSI-RS may also be determined by the transmitting terminal device. The frequency domain position determined for the SL CSI-RS cannot conflict with a frequency domain position of a PT-RS. FIG. 15 is an example diagram of a time-frequency position of an SL CSI-RS. In FIG. 15, a quantity of SL CSI-RS ports is 2, sl-CSI-RS-FirstSymbol is 8, and sl-CSI-RS-FreqAllocation is $[b_5,b_4,b_3,b_2,b_1,b_0] = [0,0,0,1,0,0]$.

**Unlicensed spectrum communication**

Unlicensed spectrum is a spectrum that is classified by a country and a region and that can be used for communication of a radio device. The spectrum is generally considered as a shared spectrum. That is, a communications device can use the spectrum provided that a regulatory requirement set for the spectrum by a country or a region is met, without applying for a dedicated spectrum grant from a dedicated spectrum management authority of the country or the region. The unlicensed spectrum may also be referred to as shared spectrum, license-free spectrum, an unlicensed frequency band, or a license-free frequency band.

In an LTE system, unlicensed spectrum is used as a supplementary band to licensed spectrum for cellular networks. An NR system may achieve seamless coverage, high spectral efficiency, high peak rates, and high reliability for cellular networks. The NR system may also use unlicensed spectrum to provide a service for a user as part of a 5G cellular network technology. In the 3GPP R16 standard, an NR system operating on unlicensed spectrum is discussed, referred to as an NR-unlicensed spectrum (NR-unlicensed spectrum, NR-U) system.

The NR-U system supports two networking modes: licensed spectrum auxiliary access and unlicensed spectrum independent access. In the licensed spectrum auxiliary access, licensed spectrum needs to be used for network access, and unlicensed spectrum is used as a secondary carrier. In the unlicensed spectrum independent access, unlicensed spectrum may be used for independent networking, and the terminal device may directly access a network by using the unlicensed spectrum. A range of unlicensed spectrum used by the NR-U system introduced in 3GPP R16 is concentrated with 5 GHz and 6 GHz bands. For example, in the United States, the unlicensed spectrum ranges from 5925 MHz to 7125 MHz; and in Europe, the unlicensed spectrum ranges from 5925 MHz to 6425 MHz. In the R16 standard, band 46 (5150 MHz to 5925 MHz) is newly defined for use as unlicensed spectrum.

The use of the unlicensed spectrum needs to meet a regulatory requirement set for the spectrum by a country or a region, for example, a communications device may implement channel access on the unlicensed spectrum by channel monitoring, so that the unlicensed spectrum is used to avoid conflict with another communications device or another communications system (for example, a Wi-Fi system). In an implementation, a communications device may use the unlicensed spectrum by following a rule of "listen-before-talk (listen-before-talk, LBT)". Therefore, for NR-U, the NR technology needs to be correspondingly enhanced to accommodate the regulatory requirements set for an unlicensed frequency band while efficiently providing services by using the unlicensed spectrum. In the 3GPP R16 standard, the NR-U technology is standardized in the following aspects: channel monitoring process; an initial access process; control channel design; HARQ and scheduling; scheduling-free grant transmission, and the like.

**LBT**

An LBT principle may include that: a communications device is required to perform LBT first before transmitting a signal on a channel in unlicensed spectrum. If the LBT succeeds, a channel listening result is that the channel is idle. Only when a channel is idle, the communications device can transmit a signal by using the channel. If the channel monitoring result of the communications device on the channel is that the channel is busy or the LBT fails, the communications device cannot transmit a signal by using the channel. In addition, to ensure fairness in using a spectrum resource of shared spectrum, if the communications device performs LBT successfully in unlicensed spectrum, duration in which the communications device may use the channel for communication transmission cannot exceed specific duration. In this mechanism, maximum duration available for communication after one time of successful LBT is restricted, so that different communications devices may access the shared channel, and different communications systems coexist friendly in the shared spectrum.

Signal transmission in the unlicensed spectrum involves concepts related to channel occupancy, such as channel occupancy time (channel occupancy time, COT), maximum channel occupancy time (maximum channel occupancy time, MCOT), COT of a network device (such as a base station), and COT of a terminal device.

MCOT may mean a maximum time length during which a communications device is allowed to transmit signals by using a channel in an unlicensed spectrum if LBT succeeds. It should be understood that MCOT refers to a time period occupied by signal transmission. If there are different channel access priority classes for the communications device, the communications device may correspond to different MCOTs. A maximum value of the MCOT may be set to, for example, 10 ms.

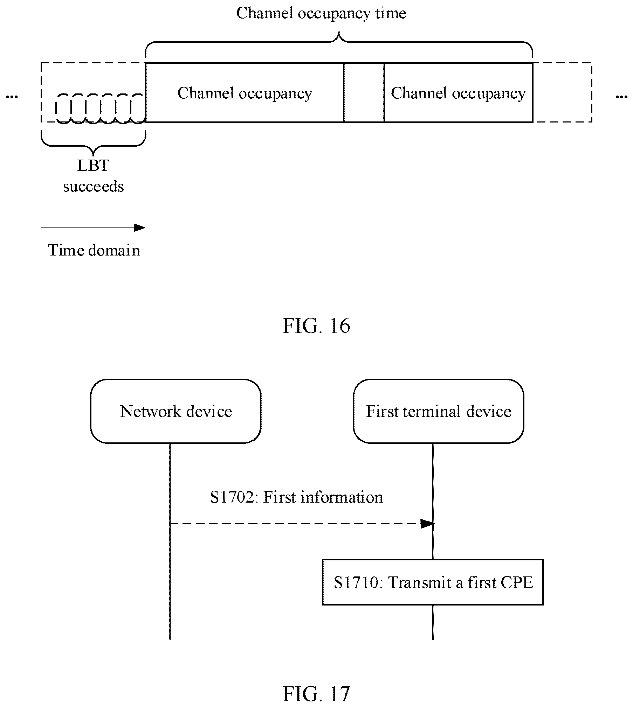

FIG. 16 is an example diagram of one channel occupancy time obtained by a communications device after successful LBT on a channel in unlicensed spectrum and use of resources within the channel occupancy time for signal transmission.

Although channel listening is not specified in a global regulation, the channel listening can provide benefits such as avoiding communication and transmission interference between communications systems operating in shared spectrum and enabling friendly coexistence of the communications systems. Therefore, in a design process of an NR system operating in the unlicensed spectrum, channel listening is a feature required to be supported by communications devices in the system.

**Channel access mode for unlicensed spectrum**

A channel access mode of accessing a channel through LBT is introduced in some communications systems (such as an NR-U system).

From the perspective of network deployment for a system, the channel access mode of accessing a channel through LBT includes two mechanisms: one is LBT for load based equipment (load based equipment, LBE), also referred to as dynamic channel listening or dynamic channel occupancy; and the other is LBT for frame based equipment (frame based equipment, FBE), also referred to as semi-persistent channel listening or semi-persistent channel occupancy. A principle of dynamic channel listening LBT is that a communications device performs LBT on a carrier of an unlicensed spectrum after a service arrives, and starts signal transmission on the carrier after the LBT succeeds.

A mode of the dynamic channel listening LBT may include a type 1 (Type1) channel access mode and a type 2 (Type2) channel access mode.

The following uses a network device as an example to describe in detail the type 1 channel access mode and the type 2 channel access mode. It may be understood that, a process in which a terminal device or another communications device performs channel monitoring by using the type 1 channel access mode or the type 2 channel access mode is similar to the following process.

The type 1 channel access mode may also be referred to as multi-slot channel detection with random backoff based on contention window size adjustment. In the type 1 channel access mode, a corresponding channel access priority class (channel access priority class, CAPC) p may be selected based on a priority of a service to be transmitted. A communications device may initiate channel occupation of duration Tmcot based on a channel access priority class p. If a network device uses the type 1 channel access mode, the network device can transmit its own data during a channel occupancy time, and also can share the COT with a terminal device. The so-called sharing of the COT with a terminal device means allowing the terminal device to transmit data in a time length corresponding to the COT (namely, a COT obtained by the network device through channel access). Correspondingly, if the terminal device uses the type 1 channel access mode, the terminal device can transmit its own data during a channel occupancy time, and also can share the COT with the network device.

Table 3 shows channel access priority classes and corresponding parameters used when the terminal device performs the type 1 channel access mode.

Table 3

| Channel access priority class ($p$) | $m_p$ | $CW_{min,p}$ | $CW_{max,p}$ | Tmcot,p | Allowed $CW_p$ value |
|---|---|---|---|---|---|
| 1 | 1 | 3 | 7 | 2 ms | {3,7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

A default channel access mode on a network device side is the type 1 channel access mode. A channel access parameter corresponding to the channel access priority class $p$ is shown in Table 3. In Table 3, $m_p$ may denote a quantity of backoff slots corresponding to a channel access priority class $p$, $CW_p$ may denote a size of a contention window (contention window, CW) corresponding to a channel access priority class $p$, $CW_{min, p}$ may denote a minimum value of a value of $CW_p$ corresponding to a channel access priority class $p$, $CW_{max, p}$ may denote a maximum value of a value of $CW_p$ corresponding to a channel access priority class $p$, or $T_{mcot, p}$ may denote a maximum channel occupancy time length corresponding to a channel access priority class $p$.

The Type 2 (Type2) channel access mode is also referred to as a channel access mode based on a fixed-length channel monitoring slot. The type 2 channel access mode includes a type 2A (Type2A) channel access mode, a type 2B (Type2B) channel access mode, and a type 2C (Type2C) channel access mode. In a case that a resource in a COT is shared with another communications device, the another communications device may use the type 2 channel access mode.

In the type 2A channel access mode, the communications device may perform single-slot channel detection of 25 $\mu$s. In other words, the communications device may start channel detection ahead of data transmission by 25 $\mu$s. The channel detection of 25 $\mu$s may include channel detection of 16 $\mu$s and channel detection of 9 $\mu$s. If both detection results indicate that a channel is idle, it may be considered that the channel is idle and channel access can be performed.

In the Type 2B channel access mode, the communications device may perform single-slot channel detection of 16 $\mu$s. In a channel detection process, if the communications device detects that a channel is idle for more than 4 $\mu$s in the last 9 $\mu$s, it may be considered that the channel is idle.

In the Type 2C channel access mode, the communications device may transmit data directly through a channel without channel detection. In the Type 2C channel access mode, a time difference between a current transmission and a previous transmission is less than or equal to 16 $\mu$s. In other words, if the time difference between two transmissions is less than or equal to 16 $\mu$s, the two transmissions may be considered as a same transmission and channel detection is not required. It should be noted that, in the Type 2C channel access mode, transmission duration of the communications device is limited and usually cannot exceed 584 $\mu$s.

It should be noted that, in a special case, when the network device initiates channel occupation for transmitting a synchronizing signal/PBCH block (synchronizing signal/PBCH block, SS/PBCH block) in a discovery reference signal (discovery reference signal, DRS) window and unicast data transmission of the terminal device is not included in the DRS window, if a length of the DRS window does not exceed 1 ms and a duty cycle for transmission in the DRS window does not exceed 1/20, the network device may initiate channel occupation in the type 2A channel access mode.

**Indication of a channel access parameter**

In some communications systems (for example, an NR-U system) based on unlicensed spectrum, when a terminal device is scheduled to perform transmission of a PUSCH or a physical uplink control channel (physical uplink control channel, PUCCH), the network device may indicate a channel access mode corresponding to the PUSCH or the PUCCH by using downlink control information (downlink control information, DCI) that carries an uplink grant (UL grant) or downlink grant (DL grant). In addition, because some channel access modes need to meet a gap requirement of 16 $\mu$s or 25 $\mu$s, the terminal device may ensure a size of a gap between two times of transmission in a manner of transmitting cyclic prefix extension (cyclic prefix extension, CPE). Correspondingly, the network device may indicate a CPE length of the first symbol of uplink transmission of the terminal device.

In a specific indication, the network device may explicitly indicate, to the terminal device in a joint coding manner, a channel access parameter such as a CPE length, a channel access mode, or a channel access priority class. The following describes features of manners of indicating a channel access parameter introduced in different DCI formats.

1. Scheduling a backoff uplink grant for transmission of a PUSCH (DCI format 0_0)

A set of joint indication of a channel access mode and a CPE length is preset in a standard, and the set is shown in Table 4. The backoff uplink grant includes 2-bit LBT indication information. The 2-bit LBT indication information is used to indicate, from the set shown in Table 4, a channel access mode and a CPE length that are jointly coded. The channel access mode and the CPE length are used for transmission of a PUSCH. If the channel access mode is type 1 channel access, the terminal device may select a CAPC according to a service priority.

Table 4

| LBT indication | channel access mode | CPE length |
|---|---|---|
| 0 | Type 2C channel access | C2*Symbol length-16$\mu$s-TA |
| 1 | Type 2A channel access | C3*Symbol length-25$\mu$s-TA |

(continued)

| LBT indication | channel access mode | CPE length |
|---|---|---|
| 2 | Type 2A channel access | C1*symbol length-25μs |
| 3 | Type 1 channel access | 0 |

In Table 4, a value of C1 is specified in a protocol. When subcarrier spacings is 15 kHz or 30 kHz, C1 = 1; when subcarrier spacing is 60 kHz, C1 = 2. Values of C2 and C3 are configured by using a higher layer parameter. When the subcarrier spacing is 15 kHz or 30 kHz, values of C2 and C3 range from 1 to 28. When the subcarrier spacing is 60 kHz, values of C2 and C3 range from 2 to 28.

2. Scheduling a backoff downlink grant for transmission of a PDSCH (DCI format 1_0)

A set of joint indication of a channel access mode and a CPE length is preset in a standard, and the set is shown in Table 4. The backoff downlink grant includes 2-bit LBT indication information, and the 2-bit LBT indication information is used to indicate, from the set shown in Table 4, a channel access mode and a CPE length that are jointly coded. The channel access mode and the CPE length are used for transmission of a PUCCH, and the PUCCH may carry acknowledgement (acknowledgement, ACK) or negative acknowledgement (negative acknowledgement, NACK) information corresponding to a PDSCH. If the channel access mode is the type 1 channel access, the terminal device may determine that a CAPC for transmission of the PUCCH is 1.

3. Scheduling a non-backoff uplink grant for transmission of a PUSCH (DCI format 0_1)

An LBT parameter indication set is configured at a higher layer. The LBT parameter indication set includes at least one type of joint coding. The joint coding is used to indicate a channel access mode, a CPE length, and a CAPC. The non-backoff uplink grant includes LBT indication information. The LBT indication information is used to indicate, from the LBT parameter indication set, a channel access mode, a CPE length, and a CAPC that are jointly encoded. The channel access mode, the CPE length, and the CAPC are used for transmission of a PUSCH. If the indicated channel access mode is type 2 channel access, the indicated CAPC is a CAPC used when the network device obtains the COT. In addition, the LBT indication information includes a maximum of 6 bits.

4. Scheduling a non-backoff downlink grant for transmission of a PDSCH (DCI format 1_1)

An LBT parameter indication set is configured at a higher layer. The LBT parameter indication set includes at least one type of joint coding. The joint coding is used to indicate a channel access mode and a CPE length. The non-backoff downlink grant includes LBT indication information. The LBT indication information is used to indicate, from the LBT parameter indication set, a channel access mode and a CPE length that are jointly encoded. The channel access mode and the CPE length are used for transmission of a PUCCH. The PUCCH may carry ACK or NACK information corresponding to a PDSCH. If the channel access mode is the type 1 channel access, the terminal device may determine that a CAPC for transmission of the PUCCH is 1. In addition, the LBT indication information includes a maximum of 4 bits.

In addition to the foregoing explicit indication, the network device may implicitly indicate a channel access mode in a COT. For example, when the terminal device receives an uplink grant or a downlink grant that is transmitted by a base station and indicates that a channel access type corresponding to the PUSCH or the PUCCH is the type 1 channel access, if the terminal device can determine that the PUSCH or the PUCCH belongs to a COT of the network device, for example, the terminal device receives a DCI format 2_0 transmitted by the network device and determines, based on the DCI format 2_0, that the PUSCH or the PUCCH belongs to the COT of the network device, then the terminal device may update the channel access type corresponding to the PUSCH or the PUCCH to the type 2A channel access without using the type 1 channel access.

In sidelink communication based on license-free spectrum, after listen-before-talk (listen-before-talk, LBT) succeeds, sidelink communication may still not be implemented. For example, in some sidelink communications, a resource used for sidelink communication starts from a slot boundary, that is, a sidelink signal or a sidelink channel may be transmitted only from a slot boundary. Therefore, in a time period from a time at which LBT succeeds to a slot boundary, another communications device in an inter-system may preempt a channel, causing that the terminal device cannot perform sidelink communication when the slot boundary arrives.

FIG. 17 is a schematic flowchart of a communication method according to an embodiment of this application, which is provided to resolve the foregoing problem. The method shown in FIG. 17 may be implemented by a terminal device.

The method shown in FIG. 17 may include step S1710. In step S1710, a terminal device may transmit a first CPE before performing communication by using a first sidelink resource.

The first sidelink resource may be a resource used by the terminal device to perform sidelink communication. In other words, the terminal device may transmit a sidelink signal and/or a sidelink channel based on the first sidelink resource. Based on the first sidelink resource, the terminal device may transmit sidelink data to another terminal device. That is, the terminal device may be a transmitter for sidelink communication. Therefore, the first sidelink resource may also be referred to as a first sidelink transmission resource. In some embodiments, a resource for sidelink communication needs to start from a boundary of a slot. Therefore, the first sidelink resource may start from a start instant of a slot.

A mode of determining the first sidelink resource is not limited in this application. For example, the first sidelink resource may be scheduled in a first mode. In other words, the first sidelink resource may be allocated by a network device. Alternatively, the first sidelink resource may be determined in a second mode. In other words, the first sidelink resource may be independently selected by the terminal device from a resource pool.

In addition, it should be noted that the first sidelink resource may belong to license-free spectrum. Therefore, before performing sidelink communication by using the first sidelink resource, the terminal device may perform LBT. How the terminal device performs LBT is not limited in this application. For example, the terminal device may perform LBT in a channel access mode of type 1 or type 2.

In some embodiments, the first sidelink resource may include one or more resource elements. The resource element may correspond to one sidelink slot in time domain. The resource element may correspond to one or more RBs in frequency domain. In some embodiments, the resource element may also be referred to as a sidelink transmission resource. A CPE before the one or more resource elements may be the first CPE, that is, first information may be used to indicate a length of the CPE before the one or more resource elements. Alternatively, there may be a CPE before each one of the one or more resource elements, and each CPE may be the first CPE, that is, the first information may be used to indicate a length of the CPE before any one of the one or more resource elements.

The first CPE may be transmitted before the first sidelink resource. In other words, before the first sidelink resource arrives, the terminal device may continuously transmit the first CPE. An interval between an end instant of transmitting the first CPE and a start instant of the first sidelink resource may be short or 0. The interval may meet a condition that a corresponding channel is difficult to be preempted by another communications device in the interval. As described above, the first sidelink resource may start from a start instant of a slot. Therefore, the first CPE may be transmitted before a slot for transmitting sidelink information and/or a sidelink channel. In addition, the first CPE may be transmitted after the LBT succeeds. In other words, the first CPE may be used to continue to occupy a channel on which the LBT performed by the terminal device succeeds, so as to prevent another communications device from preempting the channel.

Before sidelink communication is performed by using the first sidelink communication resource, the terminal device may occupy a channel by using the first CPE until the terminal device can perform sidelink communication by using the first sidelink resource. It may be understood that, use of the first CPE can prevent another communications device from preempting a channel on which LBT succeeds, so that the terminal device can perform sidelink communication normally by using the first sidelink resource.

In some embodiments, in a process of transmitting the first CPE, the terminal device may still perform LBT, to confirm that the channel can be used for sidelink communication. For example, before transmitting the first CPE, the terminal device may perform long LBT, and in a process of transmitting the first CPE, the terminal device may perform short LBT.

This application further proposes a technical solution for determining a length of the first CPE. For ease of description, in the following, the length of the first CPE is referred to as a first length.

In some embodiments, the first length may be determined based on the first information indicated by the network device. As shown in FIG. 17, the method shown in FIG. 17 may be implemented by the network device. The method shown in FIG. 17 may further include step S1702.

Step S1702: The network device may transmit the first information. Correspondingly, the terminal device may receive the first information.

The first information may be used to indicate the first length. A manner in which the first information indicates the first length is not limited in this application. For example, the first information may be used to directly indicate the first length, or indirectly indicate the first length.

In an implementation, the first sidelink resource may belong to a first resource pool, and the first resource pool may support one or more configured lengths. The configured length may be used to indicate a CPE length that can be supported by the first resource pool. The first information may be used to indicate that the first length is one of the one or more configured lengths. In an implementation, the first information may be used to indicate a first index, and the first index may correspond to one of the one or more configured lengths. In other words, the first information may be used to indicate that the first length is a length corresponding to the first index. In another implementation, the first information may include the first length. The terminal device may obtain the first length by parsing the first information.

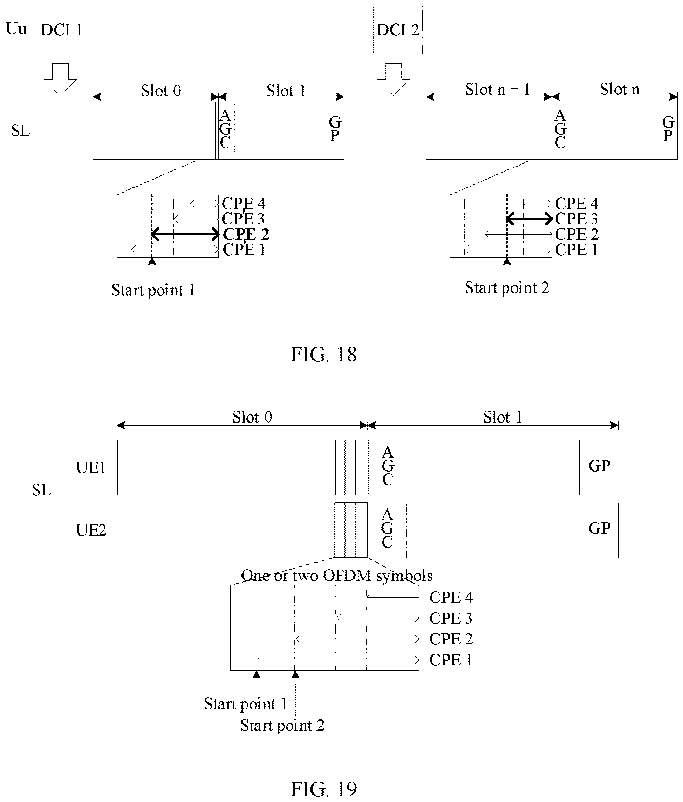

In some embodiments, in a case that a sidelink resource is scheduled in the first mode, the first length may be determined by using the first information indicated by the network device. It may be understood that, when the network device allocates resources in the first mode, the network device may allocate and schedule sidelink resources in a unified manner. In this case, the network device may flexibly indicate different CPE lengths, to avoid mutual blocking between different terminal devices. A case of mutual blocking between terminals will be described later with reference to FIG. 19, and details are not described herein again.

It should be noted that, the one or more configured lengths supported by the first resource pool may be configured by the network device. For example, the network device may configure one or more configured lengths for the first resource pool by using higher layer signalling. For example, the higher layer signalling may be RRC signalling. For example, for configuration of a first sidelink resource pool, a configuration parameter set may include a higher layer parameter, where the higher layer parameter includes a CPE length value (that is, a configured length) that can be supported by the configured first resource pool. For example, the higher layer parameter may be represented by CP-extension-SL, and CP-extension-SL may be {16, 25, 34, 43, 52, 61}. A value of CP-extension-SL is in a unit of microseconds. In other words, the first length may be one of {16, 25, 34, 43, 52, 61}.

The first information may be carried in information or a message indicating the first sidelink resource. In other words, the first information may be carried in information or a message used for resource allocation or scheduling. The information or message used for resource allocation or scheduling may be, for example, DCI/a PDCCH or higher layer signalling.

In some embodiments, the first information may be carried in first DCI or a PDCCH corresponding to first DCI.

In an implementation, the first DCI may be used to dynamically schedule the first sidelink resource. In other words, in a case of the sidelink resource allocation mode 1, if the network device allocates the first sidelink resource in a dynamically scheduled resource allocation manner, the first DCI may carry information indicating the first length.

In another implementation, the first DCI may be used to activate a first sidelink resource allocated by using a configured grant (configured grant, CG) type 2. In other words, in a case of the sidelink resource allocation mode 1, if the network device allocates the first sidelink resource in the resource allocation manner of configured grant type 2, the first DCI used to activate the configured grant type 2 may carry information indicating the first length.

Different DCI may indicate a same length or different lengths of CPEs. For example, second DCI may include second information, and the second information may be used to indicate a second length. The second length may be a length of a CPE transmitted before communication performed by using a second sidelink resource. The first length may be the same as or different from the second length. The following uses a scenario shown in FIG. 18 as an example for description.

In FIG. 18, first DCI is represented by DCI 1, and second DCI is represented by DCI 2. A first sidelink resource that is indicated by the first DCI and that is used for sidelink transmission includes a slot 1. The first DCI further indicates a first length of a first CPE transmitted before the slot 1. As shown in FIG. 18, the first length is a length corresponding to a CPE 2 which is shown in bold. Therefore, a terminal device determines a start point 1 for sidelink transmission, that is, the terminal device may start to transmit the first CPE at the start point 1. A second sidelink resource that is indicated by the second DCI and that is used for sidelink transmission includes a slot n, where n may be an integer greater than 1. The second DCI further indicates a length of a second CPE used before the slot n. The length of the second CPE may be the same as or different from a length of the first CPE. FIG. 18 is an example in which the length of the second CPE is different from the length of the first CPE. As shown in FIG. 18, the length of the second CPE is a length corresponding to a CPE 3 which is shown in bold. Therefore, the terminal device may determine a start point 2 for sidelink transmission, that is, the terminal device may start to transmit the second CPE at the start point 2.

It should be noted that, the first DCI and the second DCI may indicate a same TB, or may indicate different TBs. In a case of indicating a same TB, a CPE length indicated by the first DCI may be the same as or different from a CPE length indicated by the second DCI, that is, the first length may be the same as or different from the second length. In a case of indicating different TBs, a CPE length indicated by the first DCI may be the same as or different from a CPE length indicated by the second DCI, that is, the first length may be the same as or different from the second length. The following uses three cases as examples for description.

Case 1: K resource elements indicated by the first DCI or a PDCCH corresponding to the first DCI (hereinafter referred to as PDCCH/DCI#1) are used to transmit a first TB (hereinafter referred to as TB#1), where K may be an integer greater than or equal to 1. The PDCCH/DCI#1 may be used to indicate a CPE length before each of the K resource elements. In Case 1, CPE lengths before the K sidelink resources indicated by the PDCCH/DCI#1 may be the same.

Case 2: K resource elements indicated by the PDCCH/DCI#1 are used to transmit the TB#1, and K' resource elements indicated by the second DCI or a PDCCH corresponding to the second DCI (hereinafter referred to as PDCCH/DCI#2) are used to transmit the TB#1, where K' may be an integer different from K, and a value of K' may be greater than or equal to 1. A first length indicated by the PDCCH/DCI#1 may be the same as or different from a second length indicated by the PDCCH/DCI#2. A scenario corresponding to Case 2 may include, for example, the PDCCH/DCI#1 indicates a resource for new transmission and retransmissions of the TB#1; and in a case that both new transmission and retransmission of the PDCCH/DCI#1 fail, the PDCCH/DCI#2 may indicate a resource for subsequent retransmission of the TB#1.

Case 3: K resource elements indicated by the PDCCH/DCI#1 are used to transmit the TB#1, and K' resource elements indicated by the PDCCH/DCI#2 are used to transmit a second TB (hereinafter referred to as TB#2 for short), and a first length indicated by the PDCCH/DCI#1 may be the same as or different from a second length indicated by the DCI#2. In other words, CPE lengths of different TBs indicated by using DCI may be the same or may be different from each other.

As described above, the first information may be carried in information or a message indicating the first sidelink resource. In some embodiments, the first information may be configured or indicated by a configured grant. For example, the first information may be carried in higher layer signalling, and the higher layer signalling may be used to configure a sidelink configured grant. In other words, higher layer signalling configuring a sidelink configured grant may include the first information.

Different terminal devices may use a same time domain resource in a same resource pool, and use the same time domain resource in an FDM manner. If different terminal devices have different CPE lengths, CPE transmission of one terminal device or some terminal devices may be blocked. Thus, data cannot be transmitted by using the time domain resource allowed to be used. The following specifically describes with reference to a scenario shown in FIG. 19. As shown in FIG. 19, both a terminal device 1 (represented by using a UE 1 in FIG. 19) and a terminal device 2 (represented by using a UE 2 in FIG. 19) may perform sidelink communication by using a slot 1 in a resource pool, and the terminal device in the resource pool can transmit a CPE with any length of CPE 1 to CPE 4. If the terminal device 1 uses the CPE 1 and the terminal device 2 uses the CPE 2, the terminal device 1 may start to transmit the CPE 1 from a start point 1 after completing LBT and successfully accessing a channel. Because the terminal device 2 uses the CPE 2, the terminal device 2 may transmit the CPE 2 at a start point 2. Therefore, if the terminal device 2 is still performing LBT between the start point 1 and the start point 2, the terminal device 2 is blocked by the CPE 1 transmitted by the terminal device 1, which causes a channel listening failure for the terminal device 2 and a failure to transmit data. However, in fact, the terminal device 1 actually does not perform sidelink communication between the start point 1 and the start point 2, and the terminal device 2 can transmit data on the slot 1 in an FDM manner.

For the foregoing problem, this application proposes that for terminal devices in a same resource pool, lengths of CPEs transmitted by the terminal devices are the same. For example, the first sidelink resource may belong to a second resource pool. The second resource pool may support a first configured length. The first length may be determined based on the first configured length. All terminal devices for communication by using a resource in the second resource pool may determine a length of a CPE based on the first configured length. In some embodiments, the second resource pool may support only the first configured length, that is, the second resource pool may support only one length of a CPE, so that CPE lengths determined by the terminal devices that use the second resource pool can be the same. In a case that the second resource pool supports only the first configured length, the first configured length may be used as a default CPE length.

In some embodiments, the first length may be equal to the first configured length. In other words, all lengths of CPEs transmitted by the terminal devices for communication by using resources in the second resource pool may be the first configured length.

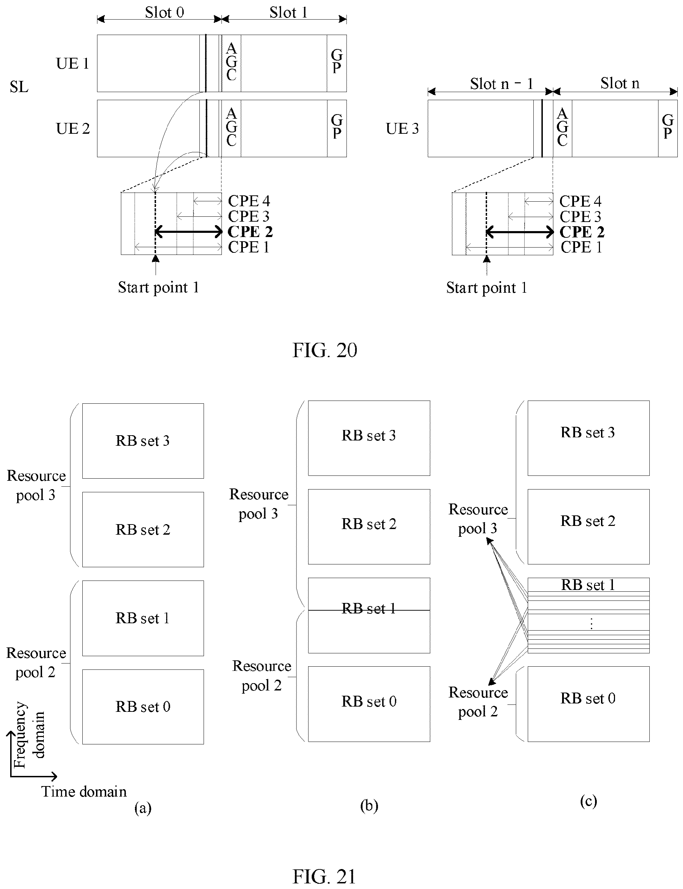

According to a technical solution provided in this application that lengths of CPEs transmitted by terminal devices in a same resource pool are the same, start points for transmitting CPEs by different terminal devices may be the same. As shown in FIG. 20, in the resource pool, a CPE length corresponding to a CPE 2 is used as the first configured length. All terminal devices that use the second resource pool may transmit a CPE by using a length corresponding to the CPE 2 before transmitting a sidelink signal or channel. A terminal device 1 and a terminal device 2 may transmit CPEs with a same length in a same slot (for example, a slot 0), and start points for transmitting the CPEs are the same. Therefore, both the terminal device 1 and the terminal device 2 may perform LBT successfully before transmitting the CPE, then transmit the CPE at a start point 1, and further start to perform sidelink communication in a same slot (for example, a slot 1). In other words, in this technical solution, a problem that a terminal device cannot perform sidelink communication due to blocking between terminal devices can be avoided.

It should be noted that, in a case that FDM exists between terminal devices, the technical solution provided in this application may be used, and in a case that time division multiplexing (time division multiplex, TDM) exists between terminal devices, the technical solution provided in this application may also be used. In other words, in a same slot of a same resource pool, when FDM exists in different terminal devices, CPEs with a same length may be transmitted. In different slots of a same resource pool, when TDM exists between different terminal devices, different terminal devices may transmit a CPE of a same length. Still using FIG. 20 as an example, a length of a CPE transmitted by a terminal device 3 (represented by a UE 3 in FIG. 20) in a slot n-1 is the same as a length of a CPE transmitted by the terminal device 1 in a slot 0.

It should be noted that the first configured length of the second resource pool may be configured by a network device, or may be pre-configured. For example, the network device may indicate the first configured length by using the first information, so as to indicate the first length. In other words, the network device may indirectly indicate the first length by indicating the first configured length.

In an implementation, the network device may configure or indicate the first configured length by using higher layer signalling. For example, when the network device configures the second resource pool, a configuration parameter set may include a higher layer parameter, and the higher layer parameter may include a CPE length value that can be supported by the configured resource pool. The higher layer parameter may be represented by CP-extension-SL, and CP-extension-SL may meet CP-extension-SL = {34}. The higher layer parameter may be in a unit of microseconds.

In some embodiments, when the network device re-configures the second resource pool, the first configured length may be changed, or the first configured length may remain unchanged.

This application further provides a technical solution for determining, based on a relationship between different resource pools, a CPE length supported by a corresponding resource pool. The relationship between different resource pools may include, for example, the following cases: being formed by different resource block sets (resource block set, RB set), and part of or all resources belong to a same RB set. The following describes with reference to FIG. 21.

In some embodiments, different resource pools (for example, a second resource pool and a third resource pool) may be formed by different RB sets. In other words, RB sets included in the second resource pool are totally different from RB sets included in the third resource pool . In other words, no RB set included in the second resource pool overlaps an RB set included in the third resource pool. Part (a) of FIG. 21 is an example diagram in which a second resource pool and a third resource pool are formed by different RB sets. As shown in part (a) of FIG. 21, the second resource pool (shown in FIG. 21 as the resource pool 2) includes an RB set 0 and an RB set 1. The third resource pool (shown in FIG. 21 as the resource pool 3) includes an RB set 2 and an RB set 3.

In some embodiments, part of or all of the different resource pools (for example, the second resource pool and the third resource pool) may belong to a same RB set. For example, the RB set included in the second resource pool is completely the same as the RB set included in the third resource pool. Alternatively, part of or all resources in the second resource pool and part of or all resources in the third resource pool belong to one or more same RB sets. For example, part of RBs in an RB set belong to the second resource pool, and another part of RBs in the RB set belong to the third resource pool.

It should be noted that, generally, it is rare that an RB or part of RBs belongs to both the second resource pool and the third resource pool.

It should be noted that, resources in a same RB set in the second resource pool or the third resource pool may be continuous or discontinuous in frequency domain. Resource discontinuity in frequency domain may be implemented in frequency domain resource allocation manner of interlaced resource block (interlaced RB, IRB).

Part (b) and part (c) of FIG. 21 are described by using an example in which part of resources in a second resource pool and part of resources in a third resource pool belong to a same RB set. As shown in part (b) of FIG. 21, the second resource pool includes all resources in an RB set 0 and part of continuous resources in an RB set 1; and the third resource pool includes part of continuous resources in the RB set 1, all resources in an RB set 2, and all resources in an RB set 3. As shown in part (c) of FIG. 21, the second resource pool includes all resources in an RB set 0 and part of discontinuous resources in an RB set 1; and the third resource pool includes part of discontinuous resources in the RB set 1, all resources in an RB set 2, and all resources in an RB set 3.

It may be learned that, the technical solution provided in this application may support a case in which different resources in one RB set belong to different resource pools, thereby improving resource utilization efficiency.

It should be noted that, the second resource pool and the third resource pool may share resources in a same RB set in an FDM manner. In other words, part of or all resources in the second resource pool may be multiplexed in an FDM manner with part of or all resources in the third resource pool in a same RB set.

In a case that the second resource pool and the third resource pool are formed by different RB sets, a CPE length supported by the second resource pool may be the same as or different from a CPE length supported by the third resource pool. For example, the third resource pool may support the second configured length. A length of a CPE transmitted before communication performed by using a sidelink resource in the third resource pool may be a third length, and the third length is determined based on the second configured length. The second configured length may be the same as or different from the first configured length. For the scenario shown in part (a) of FIG. 21, a CPE length supported by the second resource pool may be the same as or different from a CPE length supported by the third resource pool.

In a case that part of or all resources in the second resource pool and part of or all resources in the third resource pool belong to a same RB set, a CPE length supported by the second resource pool may be the same as a CPE length supported by the third resource pool. In other words, the second configured length may be the same as the first configured length. For the scenario shown in part (b) or part (c) in FIG. 21, a length of a CPE supported by the second resource pool may be the same as a length of a CPE supported by the third resource pool. It may be understood that, when a terminal device uses a resource in said same RB set by using the second resource pool, another terminal device may use a resource in said same RB set by using the third resource pool. If lengths of CPEs transmitted by the two terminal devices are different from each other, one of the terminal devices may be blocked as mentioned above, thus causing an anomaly in sidelink communication. Therefore, according to this application, blocking between terminal devices can be avoided.

It should be noted that, no matter whether part of or all resources in the second resource pool and part of or all resources in the third resource pool belong to a same RB set or not, FDM may exist in both the second resource pool and the third resource pool. For example, in the scenarios shown in part (a), part (b), and part (c) in FIG. 21, FDM exists in both the second resource pool and the third resource pool.

It should be noted that, the second resource pool may be used for resource allocation in a first mode or a second mode. The third resource pool may be used for resource allocation in the first mode or the second mode. In other words, in the second resource pool or the third resource pool, a terminal device may select a resource by itself, or a network device may select a resource for the terminal device. For example, the second resource pool may be used for resource allocation in the first mode, and the third resource pool may be used for resource allocation in the second mode. Alternatively, both the second resource pool and the third resource pool may be used for resource allocation in the second mode.

It should be noted that, the resource pool may be a sidelink resource pool configured by the network device, or may be a pre-configured sidelink resource pool. For example, the second resource pool may be configured by the network device, or may be pre-configured.

The first length or the first configured length may be determined according to one or more of the following information: whether the terminal device is a terminal device that initiates a COT, whether the terminal device is a terminal device that shares a COT, or a subcarrier spacing. In a case that a sidelink COT exists, the terminal device that initiates the COT may obtain the COT through a channel access procedure, and share the COT with the terminal device that shares the COT, so that the terminal device that shares the COT can transmit data in the COT.

In an implementation, if the terminal device is a terminal device that initiates a COT, in a case that a subcarrier spacing is less than 30 kHz, the first length or the first configured length may meet the following: being greater than 0 and less than or equal to one OFDM symbol length. If the terminal device is a terminal device that initiates a COT, in a case that a subcarrier spacing is greater than or equal to 30 kHz, the first length or the first configured length may meet the following: being greater than 0 and less than or equal to two OFDM symbol lengths. The subcarrier spacing may include, for example, at least one of 15 kHz, 30 kHz, or 60 kHz. For example, when the terminal device is a terminal device that initiates a COT, in a case that the subcarrier spacing is 15 kHz, a value range of the first configured length of the second resource pool (namely, a default CPE length of the second resource pool) may be greater than 0 and less than one OFDM symbol. Alternatively, when the terminal device is a terminal device that initiates a COT, in a case that the subcarrier spacing is 30 kHz or 60 kHz, a value range of the first configured length of the second resource pool (namely, a default CPE length of the second resource pool) may be greater than 0 and less than two OFDM symbols.

In another implementation, if the terminal device is a terminal device that shares a COT, the first length or the first configured length meets the following: being greater than 0 and less than or equal to one OFDM symbol length. For example, when the terminal device is a terminal device that shares a COT, in a case that the subcarrier spacing is 15 kHz, 30 kHz, or 60 kHz, a value range of the first configured length of the second resource pool (namely, a default CPE length of the second resource pool) may be greater than 0 and less than one OFDM symbol.

In a case that blocking may exist between terminal devices, this application proposes that lengths of CPEs transmitted by the terminal devices may be different from each other. A length of a CPE transmitted by a terminal device may be determined based on a first condition. In other words, the first length may be determined based on the first condition.

The first condition may be related to one or more of the following information: a priority of a first CPE, information about initiating of a COT by the terminal device, or information about occupying of a COT by the terminal device.

The priority of the first CPE may be represented by information that can reflect a priority level of the first CPE. For example, the priority of the first CPR may include a priority indicated by a physical layer (layer 1), or a CAPC corresponding to the first CPE.

The information about initiating of a COT by the terminal device may include whether the terminal device initiates the COT. For example, when the terminal device initiates the COT, a length of a corresponding CPE may be determined.

The information about occupying of a COT by the terminal device may include whether the terminal device occupies the COT. For example, when the terminal device occupies a COT initiated by another communications device, a length of a corresponding CPE may be determined.

According to the first condition, a length of a corresponding CPE may be set, so that some terminal devices may be not blocked in a case that blocking is difficult to avoid. For example, a length of a CPE transmitted by a terminal device with a higher priority may be determined based on a first condition, so as to prevent the terminal device with a higher priority from being blocked.

In an embodiment, one sidelink resource pool, for example, the second resource pool, may support N configured lengths, that is, may support N CPE lengths, where N may be greater than 1. For all terminal devices that use the second resource pool, lengths of CPEs that are transmitted before a slot for transmitting sidelink information or channel may be different from each other. The lengths of the transmitted CPEs may be selected from the N configured lengths. A selection condition may meet the foregoing first condition. For example, the terminal device may correspondingly select a configured length a as the length of the CPE according to the priority indicated by the layer 1. Alternatively, the terminal device may correspondingly select a configured length b as the length of the CPE according to the CAPC. Alternatively, the terminal device may correspondingly select a CPE length c when initiating a COT. Alternatively, when sharing a sidelink resource in a COT, the terminal device may correspondingly select a CPE length d. Herein a, b, c, and d may be one of the N configured lengths, and a, b, c, and d may be the same or different from each other.

It should be noted that, the N configured lengths may be configured by using higher layer signalling, that is, the higher layer signalling may be used to configure a configured length supported by a resource pool. For example, for configuration of a sidelink resource pool, a configuration parameter set may include one higher layer parameter, where the higher layer parameter includes CPE length values (namely, the N configured lengths) that can be supported by the configured resource pool. For example, the higher layer parameter may be represented by CP-extension-SL. The CP-extension-SL may meet CP-extension-SL = {16, 25, 34, 43, 52, 61}, where the values may be in a unit of microseconds.

It should be noted that, the foregoing embodiments may be separately implemented, or may be implemented in a combined manner.

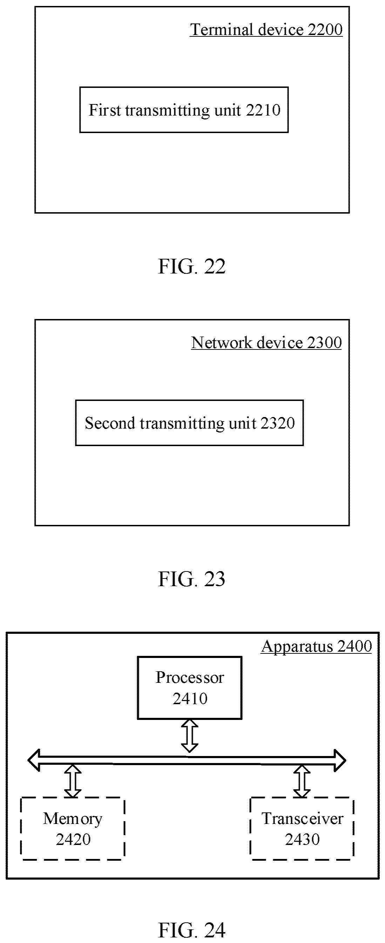

The foregoing describes the method embodiments provided in this application. The following describes the apparatus embodiments provided in this application with reference to FIG. 22 to FIG. 25. It should be understood that the descriptions of the method embodiments correspond to descriptions of the apparatus embodiments, and therefore, for parts that are not described in detail, reference may be made to the foregoing method embodiments.

FIG. 22 is a schematic structural diagram of a terminal device 2200 according to an embodiment of this application. The terminal device 2200 may include a first transmitting unit 2210.

The first transmitting unit 2210 is configured to transmit a first cyclic prefix extension CPE before performing communication by using a first sidelink resource, where a length of the first CPE is a first length.

In some embodiments, the first length is determined based on first information indicated by a network device.

In some embodiments, the first information is carried in first downlink control information DCI, and the first DCI is used to indicate the first sidelink resource that is dynamically scheduled or the first DCI is used to activate the first sidelink resource allocated by configured grant type 2.

In some embodiments, the second DCI includes second information, the second information is used to indicate a second length, the second length is a length of a CPE transmitted before communication performed by using a second sidelink resource, and the second length is the same as or different from the first length.

In some embodiments, in a case that the first sidelink resource and the second sidelink resource are used to transmit a same TB, the second length is the same as or different from the first length.

In some embodiments, the first information is carried in higher layer signalling, and the higher layer signalling is used to configure a sidelink configured grant.

In some embodiments, the first sidelink resource belongs to a first resource pool, the first resource pool supports one or more configured lengths, and the first information is used to indicate that the first length is one of the one or more configured lengths.

In some embodiments, the one or more configured lengths are configured by using higher layer signalling of the network device.

In some embodiments, the first sidelink resource belongs to a second resource pool, and the second resource pool supports a first configured length; and the first length is determined based on the first configured length.

In some embodiments, the first configured length is configured or pre-configured by the network device.

In some embodiments, a third resource pool supports a second configured length, a length of a CPE transmitted before communication performed by using a sidelink resource in the third resource pool is a third length, and the third length is determined based on the second configured length. In a case that resources included in the second resource pool and the third resource pool belong to different resource block sets RB sets, the first configured length is the same as or different from the second configured length.

In some embodiments, a third resource pool supports a second configured length, a length of a CPE transmitted before communication performed by using a sidelink resource in the third resource pool is a third length, and the third length is determined based on the second configured length. In a case that part of or all resources in the second resource pool and part of or all resources in the third resource pool belong to a same RB set, the first configured length is the same as the second configured length.

In some embodiments, the part of or all resources in the second resource pool and the part of or all resources in the third resource pool share the same RB set in a frequency division multiplexing FDM manner.

In some embodiments, the second resource pool is used for resource allocation in a first mode or a second mode, and the third resource pool is used for resource allocation in the first mode or the second mode.

In some embodiments, the first length is determined based on a first condition, and the first condition is related to one or more of the following information: a priority of the first CPE; information about initiating of a channel occupancy time COT by the terminal device; or information about sharing of a COT by the terminal device.

In some embodiments, the priority includes a priority indicated by a physical layer of the terminal device, or a channel access priority class CAPC of a channel access procedure corresponding to the first CPE.

In some embodiments, when the terminal device is a terminal device that initiates a COT, in a case that a subcarrier spacing is less than 30 kHz, the first length meets the following: being greater than 0 and less than or equal to one orthogonal frequency division multiplexing OFDM symbol length; when the terminal device is a terminal device that initiates a COT, in a case that a subcarrier spacing is greater than or equal to 30 kHz, the first length meets the following: being greater than 0 and less than or equal to two OFDM symbol lengths.

In some embodiments, if the terminal device is a terminal device that shares a COT, the first length meets the following: being greater than 0 and less than or equal to one OFDM symbol length.

In some embodiments, the first sidelink resource includes one or more resource elements, and the resource element meets the following: corresponding to one sidelink slot in time domain, and/or corresponding to one or more resource blocks RBs in frequency domain.

In some embodiments, the first sidelink resource belongs to license-free spectrum.

FIG. 23 is a schematic structural diagram of a network device 2300 according to an embodiment of this application. The network device 2300 may include a second transmitting unit 2310.

The second transmitting unit 2310 is configured to transmit first information to a terminal device. The first information is used to indicate a first length, the first length is used to indicate a length of a first cyclic prefix extension CPE, and the first CPE is a CPE transmitted before communication performed by the terminal device by using a first sidelink resource.

In some embodiments, the first information is carried in first downlink control information DCI, and the first DCI is used to indicate the first sidelink resource that is dynamically scheduled or the first DCI is used to activate the first sidelink resource allocated by configured grant type 2.

In some embodiments, the second DCI includes second information, the second information is used to indicate a second length, the second length is a length of a CPE transmitted before communication performed by using a second sidelink resource, and the second length is the same as or different from the first length.

In some embodiments, in a case that the first sidelink resource and the second sidelink resource are used to transmit a same TB, the second length is the same as or different from the first length.

In some embodiments, the first information is carried in higher layer signalling, and the higher layer signalling is used to configure a sidelink configured grant.

In some embodiments, the first sidelink resource belongs to a first resource pool, the first resource pool supports one or more configured lengths, and the first information is used to indicate that the first length is one of the one or more configured lengths.

In some embodiments, the one or more configured lengths are configured by using higher layer signalling of the network device.

In some embodiments, the first sidelink resource belongs to a second resource pool, and the second resource pool supports a first configured length; and the first configured length is configured by using the first information, and the first length is determined based on the first configured length.

In some embodiments, a third resource pool supports a second configured length, a length of a CPE transmitted before communication performed by using a sidelink resource in the third resource pool is a third length, and the third length is determined based on the second configured length. In a case that resources included in the second resource pool and the third resource pool belong to different resource block sets RB sets, the first configured length is the same as or different from the second configured length.

In some embodiments, a third resource pool supports a second configured length, a length of a CPE transmitted before communication performed by using a sidelink resource in the third resource pool is a third length, and the third length is determined based on the second configured length. In a case that part of or all resources in the second resource pool and part of or all resources in the third resource pool belong to a same RB set, the first configured length is the same as the second configured length.

In some embodiments, the part of or all resources in the second resource pool and the part of or all resources in the third resource pool share the same RB set in a frequency division multiplexing FDM manner.

In some embodiments, the second resource pool is used for resource allocation in a first mode or a second mode, and the third resource pool is used for resource allocation in the first mode or the second mode.

In some embodiments, the first length is determined based on a first condition, and the first condition is related to one or more of the following information: a priority of the first CPE; information about initiating of a channel occupancy time COT by the terminal device; or information about sharing of a COT by the terminal device.

In some embodiments, the priority includes a priority indicated by a physical layer of the terminal device, or a channel access priority class CAPC of a channel access procedure corresponding to the first CPE.

In some embodiments, when the terminal device is a terminal device that initiates a COT, in a case that a subcarrier spacing is less than 30 kHz, the first length meets the following: being greater than 0 and less than or equal to one orthogonal frequency division multiplexing OFDM symbol length; when the terminal device is a terminal device that initiates a COT, in a case that a subcarrier spacing is greater than or equal to 30 kHz, the first length meets the following: being greater than 0 and less than or equal to two OFDM symbol lengths.

In some embodiments, if the terminal device is a terminal device that shares a COT, the first length meets the following: being greater than 0 and less than or equal to one OFDM symbol length.

In some embodiments, the first sidelink resource includes one or more resource elements, and the resource element meets the following: corresponding to one sidelink slot in time domain, and/or corresponding to one or more resource blocks RBs in frequency domain.

In some embodiments, the first sidelink resource belongs to license-free spectrum.

In an optional embodiment, the first transmitting unit 2210 and the second transmitting unit 2310 may be a transceiver 2440, 4. The terminal device 2200 or the network device 2300 may further include a processor 2410 and a memory 2420, which are specifically shown in FIG. 24.

FIG. 24 is a schematic structural diagram of a communications apparatus according to an embodiment of this application. Dashed lines in FIG. 24 indicate that a unit or module is optional. The apparatus 2400 may be configured to implement the methods described in the foregoing method embodiments. The apparatus 2400 may be a chip, a terminal device, or a network device.

The apparatus 2400 may include one or more processors 2410. The processor 2410 may support the apparatus 2400 in implementing the methods described in the foregoing method embodiments. The processor 2410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2400 may further include one or more memories 2420. The memory 2420 stores a program, where the program may be executed by the processor 2410, to cause the processor 2410 to execute the methods described in the method embodiments. The memory 2420 may be separate from the processor 2410 or may be integrated into the processor 2410.

The apparatus 2400 may further include a transceiver 2430. The processor 2410 may communicate with another device or chip by using the transceiver 2430. For example, the processor 2410 may transmit data to and receive data from another device or chip through the transceiver 2430.

An embodiment of this application further provides a computer-readable storage medium for storing a program. The computer-readable storage medium may be applied to a terminal or a network device provided in embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes the computer to execute the methods performed by the terminal or the network device in embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution orders. The execution orders of the processes should be determined based on functions and internal logic of the processes, and should not be construed as any limitation on the implementation of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   transmitting, by a terminal device, a first cyclic prefix extension CPE before performing communication by using a first sidelink resource,
   wherein a length of the first CPE is a first length.

2. The method according to claim 1, wherein the first length is determined based on first information indicated by a network device.

3. The method according to claim 2, wherein the first information is carried in first downlink control information DCI, and the first DCI is used to indicate the first sidelink resource that is dynamically scheduled or the first DCI is used to activate the first sidelink resource allocated by configured grant type 2.

4. The method according to claim 3, wherein the second DCI comprises second information, the second information is used to indicate a second length, the second length is a length of a CPE transmitted before communication performed by using a second sidelink resource, and the second length is the same as or different from the first length.

5. The method according to claim 4, wherein in a case that the first sidelink resource and the second sidelink resource are used to transmit a same TB, the second length is the same as or different from the first length.

6. The method according to claim 2, wherein the first information is carried in higher layer signalling, and the higher layer signalling is used to configure a sidelink configured grant.

7. The method according to any one of claims 2 to 6, wherein
the first sidelink resource belongs to a first resource pool, the first resource pool supports one or more configured lengths, and the first information is used to indicate that the first length is one of the one or more configured lengths.

8. The method according to claim 7, wherein the one or more configured lengths are configured by using higher layer signalling of the network device.

9. The method according to claim 1, wherein the first sidelink resource belongs to a second resource pool, and the second resource pool supports a first configured length; and the first length is determined based on the first configured length.

10. The method according to claim 9, wherein the first configured length is configured by a network device or pre-configured.

11. The method according to claim 9 or 10, wherein a third resource pool supports a second configured length, a length of a CPE transmitted before communication performed by using a sidelink resource in the third resource pool is a third length, the third length is determined based on the second configured length, and in a case that resources comprised in the second resource pool and the third resource pool belong to different resource block sets, the first configured length is the same as or different from the second configured length.

12. The method according to claim 9 or 10, wherein a third resource pool supports a second configured length, a length of a CPE transmitted before communication performed by using a sidelink resource in the third resource pool is a third length, the third length is determined based on the second configured length, and in a case that part of or all resources in the second resource pool and part of or all resources in the third resource pool belong to a same resource block set, the first configured length is the same as the second configured length.

13. The method according to claim 12, wherein the part of or all resources in the second resource pool and the part of or all resources in the third resource pool share the same resource block set in a frequency division multiplexing FDM manner.

14. The method according to any one of claims 11 to 13, wherein the second resource pool is used for resource allocation in a first mode or a second mode, and the third resource pool is used for resource allocation in the first mode or the second mode.

15. The method according to claim 1, wherein the first length is determined based on a first condition, and the first condition is related to one or more of following information:

    a priority of the first CPE;
    information about initiating of a channel occupancy time COT by the terminal device; or
    information about sharing of a COT by the terminal device.

16. The method according to claim 15, wherein the priority comprises a priority indicated by a physical layer of the terminal device, or a channel access priority class CAPC of a channel access procedure corresponding to the first CPE.

17. The method according to any one of claims 1 to 16, wherein

    when the terminal device is a terminal device that initiates a COT, in a case that a subcarrier spacing is less than 30 kHz, the first length meets following: being greater than 0 and less than or equal to one orthogonal frequency division multiplexing OFDM symbol length;

when the terminal device is a terminal device that initiates a COT, in a case that a subcarrier spacing is greater than or equal to 30 kHz, the first length meets following: being greater than 0 and less than or equal to two OFDM symbol lengths.

18. The method according to any one of claims 1 to 16, wherein when the terminal device is a terminal device that shares a COT, the first length meets following: being greater than 0 and less than or equal to one OFDM symbol length.

19. The method according to any one of claims 1 to 18, wherein the first sidelink resource comprises one or more resource elements, and the resource element meets following: corresponding to one sidelink slot in time domain, and/or corresponding to one or more resource blocks RBs in frequency domain.

20. The method according to any one of claims 1 to 19, wherein the first sidelink resource belongs to license-free spectrum.

21. A communication method, comprising:

transmitting, by a network device, first information to a terminal device,
wherein the first information is used to indicate a first length, the first length is used to indicate a length of a first cyclic prefix extension CPE, and the first CPE is a CPE transmitted before communication performed by the terminal device by using a first sidelink resource.

22. The method according to claim 21, wherein the first information is carried in first downlink control information DCI, and the first DCI is used to indicate the first sidelink resource that is dynamically scheduled or the first DCI is used to activate the first sidelink resource allocated by configured grant type 2.

23. The method according to claim 22, wherein the second DCI comprises second information, the second information is used to indicate a second length, the second length is a length of a CPE transmitted before communication performed by using a second sidelink resource, and the second length is the same as or different from the first length.

24. The method according to claim 23, wherein in a case that the first sidelink resource and the second sidelink resource are used to transmit a same TB, the second length is the same as or different from the first length.

25. The method according to claim 21, wherein the first information is carried in higher layer signalling, and the higher layer signalling is used to configure a sidelink configured grant.

26. The method according to any one of claims 21 to 25, wherein
the first sidelink resource belongs to a first resource pool, the first resource pool supports one or more configured lengths, and the first information is used to indicate that the first length is one of the one or more configured lengths.

27. The method according to claim 26, wherein the one or more configured lengths are configured by using higher layer signalling of the network device.

28. The method according to claim 21, wherein the first sidelink resource belongs to a second resource pool, and the second resource pool supports a first configured length; and the first configured length is configured by using the first information, and the first length is determined based on the first configured length.

29. The method according to claim 28, wherein a third resource pool supports a second configured length, a length of a CPE transmitted before communication performed by using a sidelink resource in the third resource pool is a third length, the third length is determined based on the second configured length, and in a case that resources comprised in the second resource pool and the third resource pool belong to different resource block sets, the first configured length is the same as or different from the second configured length.

30. The method according to claim 28, wherein a third resource pool supports a second configured length, a length of a CPE transmitted before communication performed by using a sidelink resource in the third resource pool is a third length, the third length is determined based on the second configured length, and in a case that part of or all resources in the second resource pool and part of or all resources in the third resource pool belong to a same resource block set, the first configured length is the same as the second configured length.

31. The method according to claim 30, wherein the part of or all resources in the second resource pool and the part of or all resources in the third resource pool share the same resource block set in a frequency division multiplexing FDM manner.

32. The method according to any one of claims 29 to 31, wherein the second resource pool is used for resource allocation in a first mode or a second mode, and the third resource pool is used for resource allocation in the first mode or the second mode.

33. The method according to claim 21, wherein the first length is determined based on a first condition, and the first condition is related to one or more of following information:

a priority of the first CPE;
information about initiating of a channel occupancy time COT by the terminal device; or
information about sharing of a COT by the terminal device.

34. The method according to claim 33, wherein the priority comprises a priority indicated by a physical layer of the terminal device or a channel access priority class CAPC of a channel access procedure corresponding to the first CPE.

35. The method according to any one of claims 21 to 34, wherein

when the terminal device is a terminal device that initiates a COT, in a case that a subcarrier spacing is less than 30 kHz, the first length meets following: being greater than 0 and less than or equal to one orthogonal frequency division multiplexing OFDM symbol length;
when the terminal device is a terminal device that initiates a COT, in a case that a subcarrier spacing is greater than or equal to 30 kHz, the first length meets following: being greater than 0 and less than or equal to two OFDM symbol lengths.

36. The method according to any one of claims 21 to 34, wherein when the terminal device is a terminal device that shares a COT, the first length meets following: being greater than 0 and less than or equal to one OFDM symbol length.

37. The method according to any one of claims 21 to 36, wherein the first sidelink resource comprises one or more resource elements, and the resource element meets following: corresponding to one sidelink slot in time domain, and/or corresponding to one or more resource blocks RBs in frequency domain.

38. The method according to any one of claims 21 to 37, wherein the first sidelink resource belongs to license-free spectrum.

39. A terminal device, comprising:

a first transmitting unit, configured to transmit a first cyclic prefix extension CPE before performing communication by using a first sidelink resource,
wherein a length of the first CPE is a first length.

40. The terminal device according to claim 39, wherein the first length is determined based on first information indicated by a network device.

41. The terminal device according to claim 40, wherein the first information is carried in first downlink control information DCI, and the first DCI is used to indicate the first sidelink resource that is dynamically scheduled or the first DCI is used to activate the first sidelink resource allocated by configured grant type 2.

42. The terminal device according to claim 41, wherein the second DCI comprises second information, the second information is used to indicate a second length, the second length is a length of a CPE transmitted before communication performed by using a second sidelink resource, and the second length is the same as or different from the first length.

43. The terminal device according to claim 42, wherein in a case that the first sidelink resource and the second sidelink resource are used to transmit a same TB, the second length is the same as or different from the first length.

**44.** The terminal device according to claim 40, wherein the first information is carried in higher layer signalling, and the higher layer signalling is used to configure a sidelink configured grant.

**45.** The terminal device according to any one of claims 40 to 44, wherein the first sidelink resource belongs to a first resource pool, the first resource pool supports one or more configured lengths, and the first information is used to indicate that the first length is one of the one or more configured lengths.

**46.** The terminal device according to claim 45, wherein the one or more configured lengths are configured by using higher layer signalling of the network device.

**47.** The terminal device according to claim 39, wherein the first sidelink resource belongs to a second resource pool, and the second resource pool supports a first configured length; and the first length is determined based on the first configured length.

**48.** The terminal device according to claim 47, wherein the first configured length is configured by a network device or pre-configured.

**49.** The terminal device according to claim 47 or 48, wherein a third resource pool supports a second configured length, a length of a CPE transmitted before communication performed by using a sidelink resource in the third resource pool is a third length, the third length is determined based on the second configured length, and in a case that resources comprised in the second resource pool and the third resource pool belong to different resource block sets, the first configured length is the same as or different from the second configured length.

**50.** The terminal device according to claim 47 or 48, wherein a third resource pool supports a second configured length, a length of a CPE transmitted before communication performed by using a sidelink resource in the third resource pool is a third length, the third length is determined based on the second configured length, and in a case that part of or all resources in the second resource pool and part of or all resources in the third resource pool belong to a same resource block set, the first configured length is the same as the second configured length.

**51.** The terminal device according to claim 50, wherein the part of or all resources in the second resource pool and the part of or all resources in the third resource pool share the same resource block set in a frequency division multiplexing FDM manner.

**52.** The terminal device according to any one of claims 49 to 51, wherein the second resource pool is used for resource allocation in a first mode or a second mode, and the third resource pool is used for resource allocation in the first mode or the second mode.

**53.** The terminal device according to claim 39, wherein the first length is determined based on a first condition, and the first condition is related to one or more of following information:

a priority of the first CPE;
information about initiating of a channel occupancy time COT by the terminal device; or
information about sharing of a COT by the terminal device.

**54.** The terminal device according to claim 53, wherein the priority comprises a priority indicated by a physical layer of the terminal device, or a channel access priority class CAPC of a channel access procedure corresponding to the first CPE.

**55.** The terminal device according to any one of claims 39 to 54, wherein

when the terminal device is a terminal device that initiates a COT, in a case that a subcarrier spacing is less than 30 kHz, the first length meets following: being greater than 0 and less than or equal to one orthogonal frequency division multiplexing OFDM symbol length;
when the terminal device is a terminal device that initiates a COT, in a case that a subcarrier spacing is greater than or equal to 30 kHz, the first length meets following: being greater than 0 and less than or equal to two OFDM symbol lengths.

**56.** The terminal device according to any one of claims 39 to 54, wherein when the terminal device is a terminal device that shares a COT, the first length meets following: being greater than 0 and less than or equal to one OFDM symbol length.

57. The terminal device according to any one of claims 39 to 56, wherein the first sidelink resource comprises one or more resource elements, and the resource element meets following: corresponding to one sidelink slot in time domain, and/or corresponding to one or more resource blocks RBs in frequency domain.

58. The terminal device according to any one of claims 39 to 57, wherein the first sidelink resource belongs to license-free spectrum.

59. A network device, comprising:

   a second transmitting unit, configured to transmit first information to a terminal device,
   wherein the first information is used to indicate a first length, the first length is used to indicate a length of a first cyclic prefix extension CPE, and the first CPE is a CPE transmitted before communication performed by the terminal device by using a first sidelink resource.

60. The network device according to claim 59, wherein the first information is carried in first downlink control information DCI, and the first DCI is used to indicate the first sidelink resource that is dynamically scheduled or the first DCI is used to activate the first sidelink resource allocated by configured grant type 2.

61. The network device according to claim 60, wherein the second DCI comprises second information, the second information is used to indicate a second length, the second length is a length of a CPE transmitted before communication performed by using a second sidelink resource, and the second length is the same as or different from the first length.

62. The network device according to claim 61, wherein in a case that the first sidelink resource and the second sidelink resource are used to transmit a same TB, the second length is the same as or different from the first length.

63. The network device according to claim 59, wherein the first information is carried in higher layer signalling, and the higher layer signalling is used to configure a sidelink configured grant.

64. The network device according to any one of claims 59 to 63, wherein
   the first sidelink resource belongs to a first resource pool, the first resource pool supports one or more configured lengths, and the first information is used to indicate that the first length is one of the one or more configured lengths.

65. The network device according to claim 64, wherein the one or more configured lengths are configured by using higher layer signalling of the network device.

66. The network device according to claim 59, wherein the first sidelink resource belongs to a second resource pool, and the second resource pool supports a first configured length; and the first configured length is configured by using the first information, and the first length is determined based on the first configured length.

67. The network device according to claim 66, wherein a third resource pool supports a second configured length, a length of a CPE transmitted before communication performed by using a sidelink resource in the third resource pool is a third length, the third length is determined based on the second configured length, and in a case that resources comprised in the second resource pool and the third resource pool belong to different resource block sets, the first configured length is the same as or different from the second configured length.

68. The network device according to claim 66, wherein a third resource pool supports a second configured length, a length of a CPE transmitted before communication performed by using a sidelink resource in the third resource pool is a third length, the third length is determined based on the second configured length, and in a case that part of or all resources in the second resource pool and part of or all resources in the third resource pool belong to a same resource block set, the first configured length is the same as the second configured length.

69. The network device according to claim 68, wherein the part of or all resources in the second resource pool and the part of or all resources in the third resource pool share the same resource block set in a frequency division multiplexing FDM manner.

70. The network device according to any one of claims 67 to 69, wherein the second resource pool is used for resource allocation in a first mode or a second mode, and the third resource pool is used for resource allocation in the first mode or the second mode.

71. The network device according to claim 59, wherein the first length is determined based on a first condition, and the first condition is related to one or more of following information:

a priority of the first CPE;
information about initiating of a channel occupancy time COT by the terminal device; or
information about sharing of a COT by the terminal device.

72. The network device according to claim 71, wherein the priority comprises a priority indicated by a physical layer of the terminal device, or a channel access priority class CAPC of a channel access procedure corresponding to the first CPE.

73. The network device according to any one of claims 59 to 72, wherein

when the terminal device is a terminal device that initiates a COT, in a case that a subcarrier spacing is less than 30 kHz, the first length meets following: being greater than 0 and less than or equal to one orthogonal frequency division multiplexing OFDM symbol length;
when the terminal device is a terminal device that initiates a COT, in a case that a subcarrier spacing is greater than or equal to 30 kHz, the first length meets following: being greater than 0 and less than or equal to two OFDM symbol lengths.

74. The network device according to any one of claims 59 to 72, wherein when the terminal device is a terminal device that shares a COT, the first length meets following: being greater than 0 and less than or equal to one OFDM symbol length.

75. The network device according to any one of claims 59 to 74, wherein the first sidelink resource comprises one or more resource elements, and the resource element meets following: corresponding to one sidelink slot in time domain, and/or corresponding to one or more resource blocks RBs in frequency domain.

76. The network device according to any one of claims 59 to 75, wherein the first sidelink resource belongs to license-free spectrum.

77. A terminal device, comprising a memory and a processor, wherein the memory is configured to store a program, and the processor is configured to invoke the program in the memory, to cause the terminal device to execute the method according to any one of claims 1 to 20.

78. A network device, comprising a memory and a processor, wherein the memory is configured to store a program, and the processor is configured to invoke the program in the memory to cause the network device to execute the method according to any one of claims 21 to 38.

79. An apparatus, comprising a processor configured to invoke a program from a memory, to cause the apparatus to execute the method according to any one of claims 1 to 38.

80. A chip, comprising a processor, configured to invoke a program from a memory to cause a device installed with the chip to execute the method according to any one of claims 1 to 38.

81. A computer-readable storage medium, wherein the computer-readable storage medium stores a program, and the program causes a computer to execute the method according to any one of claims 1 to 38.

82. A computer program product, comprising a program that causes a computer to execute the method according to any one of claims 1 to 38.

83. A computer program, wherein the computer program causes a computer to execute the method according to any one of claims 1 to 38.

100

110

120

FIG. 1

110

120a

120a

Sidelink
communication

FIG. 2

FIG. 3

FIG. 4

FIG. 5

Terminal device 2

Terminal device 6

**Terminal device 1**

Terminal device 3

Terminal device 5

Terminal device 4

FIG. 6

Terminal device 1

Terminal device 2

Sidelink data

FIG. 7

Communication group

Terminal device 2

Terminal device 1

Terminal device 3

Terminal device 4

FIG. 8

| AG C | | | | | PSSCH | | | | | | | | GP |
|---|---|---|---|---|---|---|---|---|---|---|---|---|---|
| | | PSCCH | | | | | | | | | | | |

(a)

| AG C | | | | | PSSCH | | | | | | GP | PSFCH | GP |
|---|---|---|---|---|---|---|---|---|---|---|---|---|---|
| | | PSCCH | | | | | | | | | | | |

(b)

FIG. 9

FIG. 10

FIG. 11

| | Symbol#0 | Symbol#1 | Symbol#2 |
|---|---|---|---|
| RE#11 | | | |
| RE#10 | | | |
| RE#9 | Reference signal | Reference signal | Reference signal |
| RE#8 | | | |
| RE#7 | | | |
| RE#6 | | | |
| RE#5 | Reference signal | Reference signal | Reference signal |
| RE#4 | | | |
| RE#3 | | | |
| RE#2 | | | |
| RE#1 | Reference signal | Reference signal | Reference signal |
| RE#0 | | | |

FIG. 12

| AGC | DMRS | | | DMRS | | | DMRS | | | DMRS | | | GP |
|---|---|---|---|---|---|---|---|---|---|---|---|---|---|
| | PSCCH | | | | | | | | | | | | |
| 0 | 1 | 2 | 3 | 4 | 5 | 6 | 7 | 8 | 9 | 10 | 11 | 12 | 13 |

FIG. 13

RE#0 RE#1 RE#2 RE#3 RE#4 RE#5 RE#6 RE#7 RE#8 RE#9 RE#10 RE#11

| Port 1/Port 0 | | Port 1/Port 0 | | Port 1/Port 0 | | Port 1/Port 0 | | Port 1/Port 0 | | Port 1/Port 0 | |

FIG. 14

AGC    PSCCH    Second-stage SCI    PSSCH reference signal    PSSCH    PSSCH reference signal

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|---|
| RE#10 | | | | | | | | | | | | | | |
| RE#9 | | | | | | | | | | | | | | |
| RE#8 | | | | | | | | | | | | | | |
| RE#7 | | | | | | | | | | | | | | |
| RE#6 | | | | | | | | | | | | | | |
| RE#5 | | | | | | | | | CSI-RS | | | | | |
| RE#4 | | | | | | | | | CSI-RS | | | | | |
| RE#3 | | | | | | | | | | | | | | |
| RE#2 | | | | | | | | | | | | | | |
| RE#1 | | | | | | | | | | | | | | |
| RE#0 | | | | | | | | | | | | | | |

FIG. 15

Channel occupancy time

Channel occupancy | Channel occupancy

LBT
succeeds

Time domain

FIG. 16

Network device          First terminal device

S1702: First information

S1710: Transmit a first CPE

FIG. 17

Uu ☐ DCI 1

⬇

SL

| Slot 0 | Slot 1 |

A
G
C

G
P

CPE 4
CPE 3
**CPE 2**
CPE 1

Start point 1

☐ DCI 2

⬇

| Slot n − 1 | Slot n |

A
G
C

G
P

CPE 4
CPE 3
CPE 2
CPE 1

Start point 2

FIG. 18

| Slot 0 | Slot 1 |

SL

UE1

A
G
C

GP

UE2

A
G
C

GP

One or two OFDM symbols

CPE 4
CPE 3
CPE 2
CPE 1

Start point 1

Start point 2

FIG. 19

FIG. 20

FIG. 21

Terminal device 2200

First transmitting unit 2210

FIG. 22

Network device 2300

Second transmitting unit 2320

FIG. 23

Apparatus 2400

Processor 2410

Memory 2420

Transceiver 2430

FIG. 24

## INTERNATIONAL SEARCH REPORT

| International application No. |
| --- |
| **PCT/CN2023/083447** |

| A. | CLASSIFICATION OF SUBJECT MATTER |
| --- | --- |

H04W72/40(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, ENTXT, VEN: 侧链, 侧行, 旁链, 直连, 扩展, 延长, 循环前缀, 长度, 指示, 信道占用时间, 优先级, 资源池, 共享, 无执照, 非授权, 免许可, D2D, sidelink, SL, extension, CP, length, indicator, COT, prior, resource pool, unlicensed

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115362654 A (BEIJING XIAOMI MOBILE SOFTWARE CO., LTD.) 18 November 2022 (2022-11-18)<br>description, paragraphs [0052]-[0088] and [0125]-[0158] | 1-10, 15-28, 33-48, 53-66, 71-83 |
| X | WO 2021208031 A1 (QUALCOMM INC.) 21 October 2021 (2021-10-21)<br>description, paragraphs [0095]-[0150] | 1-10, 15-28, 33-48, 53-66, 71-83 |
| X | QUALCOMM INC. "Channel Access Procedures for NR Unlicensed"<br>*3GPP TSG RAN WG1 Meeting #99, R1-1912938*, 09 November 2019 (2019-11-09), sections 2.1 and 2.2 | 1-10, 15-28, 33-48, 53-66, 71-83 |
| A | CN 114915390 A (SPREADTRUM COMMUNICATIONS (SHANGHAI) CO., LTD.) 16 August 2022 (2022-08-16)<br>entire document | 1-83 |
| A | US 2022078845 A1 (SONY GROUP CORP.) 10 March 2022 (2022-03-10)<br>entire document | 1-83 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 November 2023** | **25 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/083447** |

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2022267929 A1 (HUAWEI TECHNOLOGIES CO., LTD.) 29 December 2022 (2022-12-29)<br>     entire document | 1-83 |

Form PCT/ISA/210 (second sheet) (July 2022)

**INTERNATIONAL SEARCH REPORT**
Information on patent family members

International application No.

**PCT/CN2023/083447**

| Patent document cited in search report | | | Publication date (day/month/year) | Patent family member(s) | | | Publication date (day/month/year) |
|---|---|---|---|---|---|---|---|
| CN | 115362654 | A | 18 November 2022 | None | | | |
| WO | 2021208031 | A1 | 21 October 2021 | US | 2023146161 | A1 | 11 May 2023 |
| | | | | EP | 4136792 | A1 | 22 February 2023 |
| | | | | CN | 115380488 | A | 22 November 2022 |
| | | | | CN | 115380488 | B | 04 July 2023 |
| | | | | IN | 202227044841 | A | 14 October 2022 |
| CN | 114915390 | A | 16 August 2022 | WO | 2022166975 | A1 | 11 August 2022 |
| US | 2022078845 | A1 | 10 March 2022 | EP | 3927102 | A1 | 22 December 2021 |
| | | | | EP | 3927102 | A4 | 20 April 2022 |
| | | | | WO | 2020164439 | A1 | 20 August 2020 |
| | | | | CN | 111565475 | A | 21 August 2020 |
| | | | | CN | 113396633 | A | 14 September 2021 |
| WO | 2022267929 | A1 | 29 December 2022 | CN | 115580920 | A | 06 January 2023 |

Form PCT/ISA/210 (patent family annex) (July 2022)